# EUROPEAN PATENT APPLICATION

(11) **EP 1 354 768 A2**
(43) Date of publication of application: **22.10.2003**
(21) Application number: 02021190.0
(22) Date of filing: 24.09.2002
(51) Int. Cl.: B60R 21/20, B60R 21/16

(54) **Airbag module and method for attaching an airbag to an airbag holder**

(30) Priority: 09.04.2002 US 371076 P; 10.04.2002 US 371308 P; 10.04.2002 US 371480 P
(71) Applicant: Delphi Technologies, Inc., Troy, MI 48007 (US)
(72) Inventor: Webber, James Lloyd, Shelby Township, Michigan 48316 (US); Asic, Sabina, 42369 Wuppertal (DE)
(74) Representative: Manitz, Finsterwald & Partner GbR

(57) **Zusammenfassung**

Ein Luftsackmodul umfasst einen Luftsackhalter, der einen Grundkörper und einen auf einer Umfangsfläche des Grundkörpers um diesen, ganz oder bis auf wenigstens eine Unterbrechung umlaufenden Vorsprung aufweist, und einen Luftsack, der einen Luftsackmund aufweist, dessen Umfangskontur kleiner ist als eine den Vorsprung und den Grundkörper umschließende Umfangskontur und der an dem Luftsackhalter in einer Endlage gehaltenen ist, in der der Luftsackmund den Grundkörper umschließt und dabei den Vorsprung an einer ersten Seite des Vorsprungs hintergreift.

## Description

Die vorliegende Erfindung betrifft ein Luftsackmodul und ein Verfahren zur Befestigung eines Luftsacks an einem Luftsackhalter eines Luftsackmoduls.

In vielen Kraftfahrzeugen sind Airbags vorgesehen, um bei einer Kollision des Kraftfahrzeugs mit einem Hindernis die Insassen des Kraftfahrzeugs davor zu schützen, ungedämpft auf Gegenstände in dem Fahrgastinnenraum oder Begrenzungen des Fahrgastinnenraums aufzuprallen.

Hierzu weist ein konventioneller Airbag ein Luftsackmodul auf, das einen Gasgenerator und einen Luftsack mit einer als Luftsackmund bezeichneten Öffnung umfasst. Bei einem Aufprall wird Gas des Gasgenerators durch den Luftsackmund in den Luftsack geführt, wodurch der Luftsack aufgeblasen und entfaltet wird.

Der Luftsack ist dabei an einem Luftsackhalter des Luftsackmoduls, beispielsweise einem Gehäuse oder einem Grundkörper des Luftsackmoduls, gehalten, damit er sich bei Zuführung des Gases des Gasgenerators und der dadurch herbeigeführten Entfaltung nicht von dem Luftsackmodul lösen kann. Zur Befestigung des Luftsackmundes werden hierzu mehrere Befestigungselemente wie zum Beispiel Bolzen bzw. Schrauben verwendet.

Diese Art der Befestigung hat jedoch den Nachteil, dass mit der Anzahl der Befestigungselemente auch die Anzahl der notwendigen Montageschritte bei der Befestigung des Luftsacks an dem Luftsackhalter steigt und zu einem hohen Fertigungsaufwand führt.

Der vorliegenden Erfindung liegt daher die Aufgabe zugrunde, ein Luftsackmodul mit einem Luftsackhalter und einem Luftsack bereitzustellen, der einfach an dem Luftsackhalter zu befestigen ist, sowie ein Verfahren zu schaffen, mit dem ein Luftsack einfach an einem Luftsackhalter eines Luftsackmoduls befestigbar ist.

Die Aufgabe wird nach einer ersten Alternative gelöst durch ein Luftsackmodul mit den Merkmalen des Anspruchs 1.

Ein erfindungsgemäßes Luftsackmodul nach der ersten Alternative umfasst einen Luftsackhalter, der einen Grundkörper und einen auf einer Umfangsfläche des Grundkörpers um diesen, ganz oder bis auf wenigstens eine Unterbrechung umlaufenden Vorsprung aufweist, und einen Luftsack, der einen Luftsackmund aufweist, dessen Umfangskontur kleiner ist als eine den Vorsprung und den Grundkörper umschließende Umfangskontur und der an dem Luftsackhalter in einer Endlage gehalten ist, in der der Luftsackmund den Grundkörper umschließt und dabei den Vorsprung an einer ersten Seite des Vorsprungs hintergreift, wobei der Vorsprung und der Luftsackmund so ausgebildet sind, dass zur Montage des Luftsacks an dem Luftsackhalter ein erster Abschnitt eines Randes des Luftsackmundes hinter den Vorsprung auf eine erste Seite des Vorsprungs führbar ist und dabei ein an den ersten Abschnitt angrenzender zweiter Abschnitt des Randes auf einer der ersten Seite gegenüberliegenden, zweiten Seite des Vorsprungs angeordnet ist, und dass der Rand dann durch eine Verformung in die Endlage hinein bewegbar ist.

Die Aufgabe wird nach der ersten Alternative weiterhin gelöst durch ein Verfahren zur Befestigung eines Luftsacks mit den Merkmalen des Anspruchs 25.

Bei diesem erfindungsgemäßen Verfahren zur Befestigung eines Luftsacks, der einen durch einen umlaufenden Rand begrenzten Luftsackmund aufweist, an einem Luftsackhalter, der einen Grundkörper und einen auf einer Umfangsfläche des Grundkörpers um diesen, ganz oder bis auf wenigstens eine Unterbrechung umlaufenden Vorsprung aufweist, wird ein erster Abschnitt eines Randes des Luftsackmundes über den Vorsprung hinweg hinter denselben geführt und ein zweiter, zu dem ersten komplementärer Abschnitt des Randes unter Verformung des Luftsackmundes in eine Endlage hineinbewegt, in der der Rand den Grundkörper umschließt und dabei den Vorsprung hintergreift.

Der Luftsack des erfindungsgemäßen Luftsackmoduls nach der ersten Alternative ist mit dem erfindungsgemäßen Verfahren nach der ersten Alternative an dem Luftsackhalter des erfindungsgemäßen Luftsackmoduls nach der ersten Alternative befestigbar.

Der Luftsackhalter weist also einen Grundkörper auf, der in der Endlage von dem Luftsackmund, das heißt einer entsprechenden Öffnung des Luftsacks, umschlossen wird. Hierdurch wird eine mögliche Bewegung des Luftsacks in Richtungen tangential zu dem Rand des Luftsackmunds begrenzt. Der Vorsprung an dem Luftsackhalter, der ganz oder bis auf wenigstens eine Unterbrechung auf einer Umfangsfläche des Grundkörpers ausgebildet ist, begrenzt eine Bewegung des Luftsackmundes und damit des Luftsacks aus der Endlage heraus über den Vorsprung hinaus, da die Umfangskontur des Luftsackmundes kleiner ist als eine den Vorsprung und den Grundkörper umschließende Umfangskontur um den Luftsackhalter. Unter der Umfangskontur des Luftsacks in der Endlage wird dabei die Umfangskontur verstanden, die vorliegt, wenn der Luftsackmund bzw. dessen Rand nicht verformt und insbesondere durch einwirkende Kräfte gedehnt ist. Unter der Umfangskontur des Grundkörpers wird dagegen eine Einhüllende verstanden, die den Grundkörper und den Vorsprung umgibt. Ist der Vorsprung unterbrochen, wird die Einhüllende die Unterbrechung daher glatt überspannen.

Insgesamt bedeutet dies, dass der Vorsprung und der Luftsackmund mit seinem Rand so ausgebildet sind, dass der Luftsack in der Endlage durch eine Verschiebung nicht über den Vorsprung hinweg bewegbar ist.

Der Vorsprung ist dabei vorzugsweise so angeordnet, dass er eine durch ein Entfalten des Luftsacks hervorgerufene Bewegung des Luftsackmundes begrenzt, das heißt dass der Luftsackmund von dem Vorsprung gehalten wird, ohne dass der Luftsack von den beim Entfalten des Luftsacks durch eine Gasentwicklung oder -ausdehnung auftretenden Kräften von dem Luftsackhalter abziehbar ist. Vorzugsweise sind dazu Vorsprung und Luftsackmund mit Ihren Umfangskonturen so ausgebildet, dass auch bei Entfalten des Luftsacks der Luftsackmund nicht über den Vorsprung ziehbar ist.

Dadurch, dass der Luftsack allein durch die Unterschiede in den Umfangskonturen des Luftsackmundes und des Grundkörpers mit dem Vorsprung an einer Bewegung über den Vorsprung hinweg gehindert wird und darüber hinaus eine Bewegung quer hierzu durch den Grundkörper begrenzt wird, ergibt sich eine Befestigung des Luftsacks ohne weitere Hilfsmittel wie separate Stifte, Nieten, Schrauben oder auch Befestigungsringe.

Der Vorsprung und der Luftsackmund sind weiterhin so ausgebildet, dass der Luftsack an dem Luftsackhalter befestigbar ist, indem der Luftsackmund unter Verformung über den Vorsprung bewegt wird. Der Luftsackmund wird dazu mit einem ersten Abschnitt eines Randes des Luftsackmundes zunächst hinter den Vorsprung geführt, wobei der restliche, komplementäre Abschnitt des Luftsackmundes auf der zweiten Seite des Vorsprungs angeordnet ist. Da der Luftsackmund im unverformten Zustand eine kleinere Umfangskontur aufweist als der Grundkörper mit dem Vorsprung, kann der komplementäre Abschnitt nur durch eine Verformung des Luftsackmundes über den Vorsprung geführt werden, wobei gleichzeitig eine Verschiebung des verformten Luftsackmundes erfolgen kann. Bei dieser Verformung kann es sich zum einen um eine Verformung ohne wesentliche Verlängerung der Umfangskontur handeln. Beispielsweise kann ein kreisförmiger Luftsackmund zu einem Oval verformt werden. Es kann jedoch auch der Rand des Luftsackmundes allein oder zusätzlich gedehnt werden, um eine Bewegung des komplementären Abschnittes des Randes des Luftsackmundes in die Endlage zu ermöglichen. Die notwendige Verformung ist zweckmäßigerweise derart, dass sie bei einer Auslösung einer Luftsackentfaltung durch die dabei auftretenden Kräfte auf den Luftsackmund nicht auftritt.

Nachdem der Luftsackmund hinter den Vorsprung geführt ist, kann die Verformung zweckmäßigerweise wenigstens teilweise wieder rückgängig gemacht werden.

Der Luftsackmund sollte zur Erzielung einer möglichst weitgehenden Gasdichtheit der Befestigung möglichst klein sein, muss aber andererseits groß genug sein, um erfindungsgemäß hinter dem Vorsprung an dem Luftsackhalter befestigbar zu sein. Daher werden zweckmäßig die Form und Größe des Grundkörpers auf beiden Seiten des Vorsprungs bzw. die der entsprechenden Umfangskonturen, die des Vorsprungs selbst bzw. der entsprechenden Umfangskontur und die des Luftsackmundes in Abhängigkeit voneinander geeignet gewählt, wobei die oben genannten Erfordernisse für die Haltefunktion erfüllt sein sollen. Dabei ist es grundsätzlich in Bezug auf das Befestigungsverfahren vorteilhaft, wenn die Umfangskontur des Grundkörpers auf wenigstens einer Seite des Vorsprungs möglichst klein gegenüber der des Vorsprungs ist.

Dieses Verfahren erfordert außer einer Verformung und gegebenenfalls Verschiebung des Luftsackmundes keine weitere Handhabung von Befestigungsmitteln, wie sie oben genannt wurden, wodurch der Montageprozess erheblich vereinfacht wird.

Insgesamt ergibt sich so eine sehr einfache Befestigung eines Luftsacks an einem entsprechenden Luftsackhalter ohne die Verwendung weiterer Befestigungsmittel.

Vorzugsweise ist der Vorsprung als Ringflansch ausgebildet, wodurch eine gleichmäßige Kraftübertragung bei gleichzeitig guter Abdichtung zwischen Luftsackmund und Ringflansch erreicht wird.

Zur einfacheren Herstellung des erfindungsgemäßen Luftsackhalters ist es bevorzugt, dass der Grundkörper mit dem Vorsprung einstückig ausgebildet ist. Darüber hinaus wird so eine stabile Verbindung zwischen dem Vorsprung und dem Grundkörper erreicht, was insbesondere in Anbetracht der bei einer Entfaltung des Luftsacks auftretenden Kräfte vorteilhaft ist. Grundkörper und Vorsprung können dabei als Kunststoffspritzgußteil oder als Druckgußteil ausgeführt sein.

Besonders bevorzugt ist der Grundkörper mit dem Vorsprung einstückig so ausgebildet, dass der Luftsackmund nicht zerstörungsfrei aus der Endlage heraus in einer Richtung entgegen dem Vorsprung von dem Grundkörper entfernbar ist. Hierzu kann der Grundkörper beispielsweise entsprechende weitere vorspringende Bereiche oder auch einen umlaufenden Flansch aufweisen. Insbesondere kann der Grundkörper einstückig mit einer Trägerplatte des Luftsackmoduls ausgebildet sein, mit der das Luftsackmodul an einem Kraftfahrzeug befestigbar ist. Ein solches Luftsackmodul zeichnet sich durch eine sehr geringe Anzahl von Einzelteilen aus.

Bei dem erfindungsgemäßen Verfahren ist es bevorzugt, dass der Luftsackmund bei der Verformung gedehnt wird. Die Dehnung, die insbesondere mit einer Änderung der Form des Luftsackmundes einhergehen kann, erfolgt dabei vorzugsweise im elastischen Bereich, das heißt, dass die Länge der Umfangskontur des Luftsackmundes vor und nach der Dehnung im Wesentlichen gleich ist. Hierdurch kann der Luftsackmund in der Endlage den Vorsprung weiter hintergreifen, so dass der Luftsackmund durch die bei einem Entfalten bzw. Aufblasen des Luftsacks auftretenden Kräfte sehr viel schwerer bzw. gar nicht über den Vorsprung bewegbar ist. Hierzu kann beispielsweise ein Werkzeug mit einem oder auch zwei hebelartigen Elementen verwendet werden, die ähnlich wie bei der Montage von Reifen auf Felgen dazu benutzt werden, den komplementären Abschnitt des Luftsackmundes bei der Montage bei gleichzeitiger Dehnung über den Vorsprung hinweg zu bewegen.

Die Aufgabe wird nach einer zweiten Alternative weiterhin gelöst durch ein Luftsackmodul mit den Merkmalen des Anspruchs 3.

Das erfindungsgemäße Luftsackmodul umfasst einen Luftsackhalter, der einen Grundkörper und einen an einer Umfangsfläche des Grundkörpers ausgebildeten Vorsprung aufweist, und einen Luftsack, der einen Luftsackmund aufweist, dessen Umfangskontur kleiner ist als eine den Vorsprung und den Grundkörper umschließende Umfangskontur und der an dem Luftsackhalter in einer Endlage gehalten ist, in der der Luftsackmund den Grundkörper umschließt und dabei den Vorsprung an einer ersten Seite des Vorsprungs hintergreift, wobei der Vorsprung eine Ausnehmung aufweist, die sich von der ersten Seite des Vorsprungs durch diesen hindurch zu einer zweiten, der ersten gegenüberliegenden Seite erstreckt, und wobei der Vorsprung mit der Ausnehmung und der Luftsackmund so ausgebildet sind, dass zur Montage des Luftsacks an dem Luftsackhalter ein Einführabschnitt eines Randes des Luftsackmundes in die Ausnehmung einführbar ist und dabei ein erster an den Einführabschnitt angrenzender Abschnitt des Randes auf der ersten und ein zweiter an den Einführabschnitt angrenzender Abschnitt des Randes auf der zweiten Seite des Vorsprungs angeordnet sind, und dass der Rand dann durch eine Drehbewegung relativ zu dem Grundkörper und/oder wenigstens eine Verschiebung und/oder eine Dehnung des Randes in die Endlage hinein bewegbar ist.

Nach der zweiten Alternative wird die Aufgabe weiterhin gelöst durch ein Verfahren zur Befestigung eines Luftsacks mit den Merkmalen des Anspruchs 27.

Bei diesem zweiten erfindungsgemäßen Verfahren zur Befestigung eines Luftsacks, der einen durch einen umlaufenden Rand begrenzten Luftsackmund aufweist, an einem Luftsackhalter, der einen Grundkörper und einen an einer Umfangsfläche des Grundkörpers ausgebildeten Vorsprung mit einer Ausnehmung aufweist, die sich von einer ersten Seite des Vorsprungs durch diesen hindurch zu einer zweiten, der ersten gegenüberliegenden Seite erstreckt, wird ein Einführabschnitt eines Randes des Luftsackmundes in die Ausnehmung eingeführt, wobei angrenzende erste und zweite Abschnitte des Randes auf der ersten bzw. der zweiten Seite des Vorsprungs angeordnet sind, und der Rand durch eine Drehbewegung relativ zu dem Grundkörper und/oder wenigstens eine Verschiebung und/oder eine Dehnung des Randes in eine Endlage hinein bewegt wird, in der der Rand den Grundkörper umschließt und dabei den Vorsprung hintergreift.

Wie bei dem erfindungsgemäßen Luftsackmodul nach der ersten Alternative wird bei dem erfindungsgemäßen Luftsackmodul nach der zweiten Alternative der Luftsack an dem Luftsackhalter bzw. dem Vorsprung dadurch gehalten, dass die Umfangskontur des Luftsackmundes in der Endlage kleiner ist als die Umfangskontur des Grundkörpers mit dem Vorsprung. Unter einer Umfangskontur des Vorsprungs und des Grundkörpers wird dabei verstanden, dass die Umfangskontur nach Art einer Einhüllenden möglichst glatt über die Ausnehmung des Vorsprungs hinweg ergänzt wird, so dass die durch die Ausnehmung entstehende Verlängerung der tatsächlichen Umfangskontur nicht mit eingerechnet wird. Unter der Umfangskontur des Luftsacks in der Endlage wird dabei die Umfangskontur verstanden, die vorliegt, wenn der Luftsackmund bzw. dessen Rand nicht verformt ist und insbesondere durch einwirkende Kräfte gedehnt wird. Darunter, dass die Umfangskontur des Luftsackmundes kleiner ist als die Umfangskontur des Grundkörpers mit dem Vorsprung wird bevorzugt insbesondere auch verstanden, dass die Länge der Umfangskontur des Luftsackmundes in einem Zustand, in dem dieser nicht durch äußere Kräfte gedehnt wird, kleiner ist als die Länge der Umfangskontur des Vorsprungs und des Grundkörpers, wenn die Form dieser Umfangskonturen ansonsten ähnlich sind. Darüber hinaus wird darunter auch verstanden, dass in der Endlage die Form des Luftsackmundes von der des Grundkörpers und des Vorsprungs derart abweicht, dass ein Abziehen des Luftsacks von dem Grundkörper über den Vorsprung hinweg nicht möglich ist.

Das heißt, dass der Vorsprung mit der Ausnehmung und der Luftsackmund mit seinem Rand so ausgebildet sind, dass der Luftsack in der Endlage durch eine reine Verschiebung nicht über den Vorsprung hinweg bewegbar ist.

Der Luftsack des erfindungsgemäßen Luftsackmoduls nach der zweiten Alternative ist mit dem erfindungsgemäßen zweiten Verfahren zur Befestigung eines Luftsacks an dem Luftsackhalter des Luftsackmoduls nach der zweiten Alternative befestigbar.

Die Befestigung wird hier durch die Ausnehmung wesentlich erleichtert, die sich durch den Vorsprung hindurch erstreckt. Zur Befestigung des Luftsacks wird dieser mit einem Einführabschnitt des Randes des Luftsackmundes in die Ausnehmung eingeführt. Dabei kommen der erste und der zweite Abschnitt, die zu dem Einführabschnitt benachbart sind, auf dessen erster bzw. zweiter Seite zu liegen. Die Abschnitte des Luftsackmundes, die in dieser Lage den Vorsprung noch nicht hintergreifen, also auf der zweiten Seite angeordnet sind, brauchen nun nur noch über einen Bereich des Grundkörpers mit dem Vorsprung bewegt zu werden, der eine verkürzte Umfangskontur aufweist. Hierzu kann der Luftsackrand durch eine Drehbewegung um den Grundkörper und relativ zu diesem, gegebenenfalls kombiniert mit einer Verschiebung relativ zu dem Grundkörper und/oder einer Dehnung, in die Endposition gebracht werden. Es ist jedoch auch möglich, den Luftsack durch mehrere aufeinander folgende, in verschiedenen Richtungen erfolgende Verschiebungen des Luftsacks oder des Luftsackhalters, gegebenenfalls wiederum unter Dehnung des Luftsackmundes, in die Endlage zu bringen. Schließlich ist es auch möglich, allein durch eine Dehnung, die vorzugsweise im Wesentlichen, wie oben bei dem Verfahren nach der ersten Alternative geschildert, reversibel sein kann, den noch auf der zweiten Seite des Vorsprungs befindlichen Abschnitt des Luftsackmundes über den Vorsprung hinweg hinter diesen zu bewegen.

Der Luftsackmund sollte zur Erzielung von Gasdichtheit möglichst klein sein, muss aber andererseits groß genug sein, um erfindungsgemäß hinter dem Vorsprung an dem Luftsackhalter befestigbar zu sein. Daher werden zweckmäßig die Formen und Größen des Grundkörpers auf beiden Seiten des Vorsprungs bzw. die der entsprechenden Umfangskonturen, die des Vorsprungs selbst bzw. der entsprechenden Umfangskontur, die der Ausnehmung und die des Luftsackmundes in Abhängigkeit voneinander geeignet gewählt, wobei die oben genannten Erfordernisse für die Haltefunktion erfüllt sein sollen. Dabei ist es grundsätzlich in Bezug auf das Befestigungsverfahren vorteilhaft, dass die Umfangskontur des Grundkörpers auf wenigstens einer Seite des Vorsprungs möglichst klein gegenüber der des Vorsprungs ist und/oder dass sich die Ausnehmung weit in Richtung auf den Grundkörper zu erstreckt.

Die Verwendung der Ausnehmung erlaubt eine besonders einfache Montage des Luftsacks an den Luftsackhalter, wobei insbesondere eine Dehnung des Luftsackmundes bzw. dessen Randes vermieden werden kann. Darüber hinaus wird ein besonders weites Hintergreifen des Vorsprungs durch den Rand des Luftsackmundes ermöglicht, wodurch eine besonders sichere Befestigung des Luftsacks gegen eine Bewegung des Luftsackmundes über den Vorsprung hinweg, beispielsweise beim Entfalten des Luftsacks, verhindert wird. Durch die weitgehend kräftefreie bzw. kräftearme Montage in dem bevorzugten Fall, dass im Wesentlichen keine Dehnung vorgenommen wird, werden Luftsack und Luftsackhalter bei der Montage vor möglichen Beschädigungen oder Materialermüdung weitgehend geschützt.

Obwohl die Ausnehmung die Bewegung des Luftsackmundes über den Vorsprung hinweg deutlich erleichtert, reduziert sie nicht die Sicherheit gegen ein Abziehen des Luftsacks von dem Luftsackhalter über den Vorsprung hinweg, da eine Bewegungsfolge, die der Folge der Bewegungen bei der Montage in umgekehrter Reihenfolge entspricht, aufgrund von bei einem möglichen Unfall auftretenden Kräften äußerst unwahrscheinlich bzw. unmöglich ist.

Es ergibt sich wiederum eine Befestigung des Luftsacks an dem Luftsackhalter ohne eine weitere Verwendung von separat handzuhabenden Befestigungsmitteln wie zum Beispiel Nieten, Schrauben, Stiften oder auch Befestigungsringen.

Bei der Befestigung des Luftsacks an dem Luftsackhalter kann der Luftsack gegenüber dem stationär gehaltenen Luftsackhalter gedreht werden. Es ist jedoch bevorzugt, dass der Luftsackhalter gedreht wird, da der Luftsack vorzugsweise in nicht gefaltetem Zustand befestigt wird und dann eine Bewegung des Luftsackhalters wesentlich einfacher bewirkt werden kann.

Der Vorsprung kann erfindungsgemäß auch mehr als eine Ausnehmung aufweisen. Der Rand des Luftsackmundes kann dann in jede der Ausnehmungen eingeführt werden, so dass eine Drehung um einen kleineren Winkel ausreicht, um den Rand vollständig hinter den Vorsprung zu bringen.

Bei dem Luftsackmodul nach der zweiten Alternative ist es bevorzugt, dass der Vorsprung bis auf die Ausnehmung um den Grundkörper umlaufend ausgebildet ist. Besonders bevorzugt ist er als Ringflansch ausgebildet. Hierdurch wird eine besonders große Anlagefläche zwischen dem Rand des Luftsackmundes und dem Vorsprung erzielt, so dass der Luftsack mit erhöhter Gasdichtigkeit an dem Luftsackhalter befestigbar ist. Weiterhin ergibt sich so eine bessere Verteilung von auf den Luftsack bei einer Entfaltung wirkenden Kräften auf den Luftsackhalter, so dass das Risiko einer Beschädigung des Luftsackmundes stark reduziert ist.

Die Ausnehmung kann grundsätzlich beliebig ausgebildet sein, solange sie die erfindungsgemäße Montage des Luftsacks nach der zweiten Alternative ermöglicht. Beispielsweise kann sie als Einbuchtung ausgebildet sein. Um eine möglichst große Anlagefläche zwischen dem Rand des Luftsackmundes und dem Vorsprung zu erreichen, ist es bevorzugt, dass die Ausnehmung als ein den Vorsprung durchdringender Schlitz ausgebildet ist. Eine solche Ausnehmung ist darüber hinaus besonders einfach herstellbar. Schließlich ermöglicht sie durch eine besonders schmale Ausbildung eine erhöhte Gasdichtigkeit der Luftsackbefestigung.

Besonders bevorzugt ist es dazu, dass der Schlitz um weniger als 2 mm breiter ist als die Stärke des Luftsacks im Bereich des Randes. Dabei wird unter der Stärke des Luftsacks im Bereich des Randes die Stärke des Randes einschließlich etwaiger Verstärkungen des Luftsackmundes verstanden. Es wird so zum einen noch ein einfaches Einführen des Randes des Luftsacks in die Ausnehmung bzw. den Schlitz und eine leichte Bewegbarkeit des Randes in dem Schlitz ermöglicht. Zum anderen wird der, vorzugsweise umlaufende, Vorsprung nur über einen sehr schmalen Bereich unterbrochen, so dass eine größere Anlagefläche zwischen dem Vorsprung und dem Rand des Luftsackmundes erzielt wird, die zu einer gleichmäßigeren Kräfteverteilung entlang des Randes des Luftsackmundes führt, wenn der Luftsackmund aus der Endlage in Richtung des Vorsprungs gezogen wird.

Der Schlitz kann dabei radial zu dem Umfang des Vorsprungs, das heißt orthogonal zu einer Tangente an einen Umfang des Vorsprungs, verlaufen. Es ist jedoch auch möglich, dass der Schlitz zu einer Tangente an den Umfang des Vorsprungs geneigt ist, das heißt schräg bzw. auch geschwungen vom Umfang des Vorsprungs in Richtung auf den Grundkörper ausgebildet ist.

Weiterhin ist bei dem Luftsackmodul nach der zweiten Alternative bevorzugt, dass eine Richtung, in der wenigstens ein Bereich des Schlitzes durch den Vorsprung hindurchtritt, zu einer Normalen auf eine Anlagefläche des Vorsprungs, an der der Rand des Luftsackmundes in der Endlage oder bei Zug in Richtung des Vorsprungs anliegt, geneigt ist. Die Neigung des Schlitzes erleichtert ein Einführen des Randes des Luftsackmundes in den Schlitz, insbesondere wenn dieser eng ist, sowie eine Bewegung des Randes des Luftsackmundes, wenn dieser in den Schlitz eingeführt ist, da der Rand weniger stark gekrümmt zu werden braucht.

Die folgenden bevorzugten Weiterbildungen und Ausführungsformen beziehen sich auf die erfindungsgemäßen Luftsackmodule bzw. Verfahren zur Befestigung eines Luftsacks nach den beiden oben beschriebenen Alternativen.

Um ein Abziehen des Luftsacks von der Luftsackhalterung bei einem Entfalten des Luftsacks möglichst sicher verhindern zu können, ist es bevorzugt, dass die Umfangskontur des Luftsackmundes möglichst klein relativ zu der um den Grundkörper und den Vorsprung ist.

Weiterhin ist zu diesem Zweck die Umfangskontur des Luftsackmundes bevorzugt auch bei den bei einer Entfaltung des Luftsacks auftretenden Kräften kleiner als die um den Grundkörper und den Vorsprung.

Bei einer Auslösung eines Luftsackmoduls wird Gas sehr schnell in den Luftsack geführt. Hierzu sollte möglichst wenig Gas entlang der Luftsackbefestigung entweichen können. Es ist daher bevorzugt, dass eine Anlagefläche des Vorsprungs, an der der Rand des Luftsackmundes in der Endlage oder bei Zug in Richtung des Vorsprungs anliegt, eben ist. Insbesondere kann der Vorsprung auf der dem Luftsack in der Endlage zugewandten ersten Seite flanschartig ausgebildet sein. Die Anlagefläche braucht dabei nur auf einer Längenskala eben zu sein, auf der sich der Rand des Luftsackmundes durch die zu Anfang eines Entfaltens bzw. Aufblasens des Luftsacks auftretenden Kräfte an die Anlagefläche anlegt. Über eine gute Gasdichtheit hinaus wird weiterhin eine gleichmäßige Kraftübertragung von dem Rand des Luftsackmundes auf den Vorsprung bei einer Entfaltung bzw. einem Aufblasen des Luftsacks erreicht.

Da der Luftsackmund in der Endlage den Grundkörper hinter dem Vorsprung umschließt, aber gleichzeitig über den Vorsprung bewegbar sein muss, ist der Luftsackmund in einer Richtung quer zu der Richtung auf den Vorsprung zu relativ zu dem Grundkörper begrenzt bewegbar. Es ist daher, insbesondere bei einem gegebenenfalls bis auf eine Unterbrechung oder Ausnehmung umlaufenden Vorsprung, bevorzugt, dass eine Anlagefläche des Vorsprungs, an der der Rand des Luftsackmundes in der Endlage oder bei Zug in Richtung des Vorsprungs anliegt, konisch geformt ist. Durch die konische, das heißt kegel- bzw. kegelstumpfförmige, Aufweitung in Richtung auf den Vorsprung wird bei Zug auf den Luftsack in Richtung des Vorsprungs, beispielsweise beim Entfalten bzw. Aufblasen des Luftsacks, eine Selbstzentrierung des Luftsackmundes an dem Luftsackhalter erreicht, wodurch die Gasdichtheit erhöht wird. Besonders bevorzugt weist die konische Anlagefläche keine Vertiefungen und/oder Rillen auf, so dass der Luftsack möglichst vollständig mit dem Rand des Luftsackmundes an der Anlagefläche anliegt, wodurch die Gasdichtigkeit der Luftsackbefestigung weiter verbessert wird.

Grundsätzlich kann der Grundkörper einen beliebigen Querschnitt in den zu dem Vorsprung benachbarten Bereichen aufweisen. Es ist jedoch bevorzugt, dass ein an den Vorsprung angrenzender Abschnitt des Grundkörpers einen kreisförmigen Querschnitt aufweist. Der Grundkörper kann dabei insbesondere in dem betreffenden Abschnitt als Hohlzylinder ausgebildet sein. Hierdurch wird insbesondere eine Befestigung des Luftsacks unter Verwendung einer Drehbewegung vereinfacht.

Es ist weiterhin bevorzugt, dass der Vorsprung eine kreisförmige Außenkontur aufweist. Hierdurch wird der Luftsackmund bei einer Entfaltung gleichmäßig entlang des Randes belastet, so dass er sich nur wenig oder nicht bewegt und nur wenig oder nicht verformt wird.

Der Luftsackmund kann grundsätzlich eine beliebige geeignete Form aufweisen. Um eine möglichst gleichmäßige Kraftübertragung entlang des Randes des Luftsackmundes auf den Vorsprung zu erreichen, insbesondere, wenn dessen Umfang ebenfalls Kreisform aufweist, ist es bevorzugt, dass der Luftsackmund im Wesentlichen kreisförmig ist.

Alternativ ist es bevorzugt, dass der Luftsackmund elliptisch geformt ist. Bei dem erfindungsgemäßen Verfahren ist es dann bevorzugt, dass zunächst als erster Abschnitt ein Abschnitt des Randes, der im Wesentlichen durch die Enden der längeren Hauptachse der Ellipse begrenzt ist, über den Vorsprung geführt wird, dann der zweite Abschnitt hinter den Vorsprung in die Endlage bewegt wird. Hierdurch wird die Montage des Luftsacks an dem Luftsackhalter durch die Verwendung der längeren Hauptachse wesentlich vereinfacht, wobei jedoch die Abschnitte des Luftsackmundes mit geringerem Durchmesser, das heißt näher der kürzeren Hauptachse der Ellipse, näher an dem Grundkörper angeordnet sind und damit, insbesondere bei Verwendung eines Vorsprungs mit Kreis- oder Kreissegmentform, diesen weiter hintergreifen als die Bereiche mit der größeren Hauptachse. Es wird damit eine erhöhte Gasdichtigkeit erzielt.

Bei dem Verfahren nach der zweiten Alternative ist es dabei besonders bevorzugt, dass der Luftsack durch eine Drehung in die Endlage bewegt wird, in der die längere Hauptachse des elliptisch geformten Luftsackmundes nicht im Bereich der Ausnehmung angeordnet ist. Im Bereich der Ausnehmung ergibt sich so kein oder nur ein geringer Abstand zwischen dem Luftsackrand und dem Grundkörper, so dass durch die Ausnehmung nur sehr wenig oder vorzugsweise kein Gas beim Entfalten eines Luftsacks austreten kann.

Beim Entfalten bzw. Aufblasen des Luftsacks können auf den Rand des Luftsackmundes starke Kräfte wirken. Es ist daher bevorzugt, dass der Rand wenigstens abschnittsweise verstärkt ist. Besonders bevorzugt ist die Verstärkung entlang des gesamten Randes ausgebildet. Diese Verstärkung dient insbesondere zur Reduktion einer Dehnung des Randes, die dazu führen könnte, dass durch die beim Entfalten oder Aufblasen des Luftsacks auftretenden Kräfte der Umfang des Luftsackmundes so weit aufgedehnt wird, dass dieser über den Vorsprung hinweg gezogen werden kann.

Die Verstärkung kann auf unterschiedliche Art und Weise erzielt werden.

Bei einer bevorzugten Ausführungsform weist der Rand einen Verstärkungsring auf. Dieser Verstärkungsring kann dabei mit dem eigentlichen Luftsackmaterial verschweißt sein oder auch in dieses eingenäht sein. Der Verstärkungsring soll dabei eine Flexibilität aufweisen, die hinreichend groß ist, um diesen mit dem jeweiligen erfindungsgemäßen Verfahren hinter den Vorsprung zu bewegen. Vorzugweise ist der Verstärkungsring aus dem gleichen Material gebildet, wie der Luftsack. Ein Recycling wird so erleichtert.

Alternativ oder zusätzlich ist es bevorzugt, dass der Rand zur Verstärkung beschichtet ist. Bei dieser Beschichtung kann es sich insbesondere um eine Beschichtung aus dem gleichen Material handeln, aus dem der Luftsack gebildet ist. Eine solche Verstärkung ist besonders einfach herstellbar. Besonders bevorzugt ist der Luftsack als Ganzer aus einem bereits beschichteten Luftsackmaterial bzw. -gewebe gebildet.

Alternativ oder zusätzlich hierzu ist es bevorzugt, dass der Rand durch wenigstens zwei miteinander verbundene Lagen aus Luftsackmaterial gebildet ist. Bei dem Luftsackmaterial, d.h. dem flächigen Material, aus dem der Luftsack gebildet ist, kann es sich insbesondere um ein beschichtetes oder unbeschichtetes Gewebe handeln. Eine durch den Luftsack gebildete Lage und eine weitere Lage aus Luftsackmaterial können besonders bevorzugt miteinander vernäht oder verschweißt sein. Insbesondere können dabei mehrere Nähte verwendet werden, die eine größere Verstärkung bewirken. Durch die Doppel- bzw. Mehrlagigkeit ergibt sich so in sehr einfacher Weise eine Verstärkung des Luftsackmundes.

Zur Reduktion einer Dehnung des Luftsackmundes bei einer Entfaltung bzw. bei einem Aufblasen des Luftsacks ist es weiterhin bevorzugt, dass der Vorsprung auf der dem Luftsack in der Endlage zugewandten Seite entlang wenigstens eines Teils seines Umfangs eine Hinterschneidung aufweist. Der Luftsackrand kann dann, insbesondere wenn er verstärkt ist, hinter diese Hinterschneidung gebracht werden, die bei Zug auf den Luftsack ein Abgleiten des Luftsackmundes von dem Vorsprung erschwert. Darüber hinaus bildet eine solche Hinterschneidung, insbesondere wenn der Vorsprung ganz oder bis auf eine Ausnehmung umlaufend ist, eine zusätzliche Abdichtung gegen einen Gasaustritt beim Aufblasen des Luftsacks.

Bei Verwendung nur eines Vorsprungs ist eine Bewegung des Luftsacks nur auf den Vorsprung zu, nicht aber in entgegengesetzter Richtung begrenzt. Es ist daher bevorzugt, dass ein zu dem Vorsprung komplementärer Vorsprung vorgesehen ist, der mit dem Vorsprung wenigstens abschnittsweise eine Nut zur Aufnahme des Randes des Luftsacks bildet. Die Weite der Nut richtet sich dabei nach der Stärke des Randes des Luftsackmundes und ist besonders bevorzugt nur so groß, dass der Rand des Luftsackmundes im Wesentlichen ohne Spiel in einer Richtung orthogonal zum Nutverlauf gehalten ist. Es ergibt sich so nicht nur eine sehr gute Positionierung des Luftsackmundes, sondern auch eine Verbesserung der Gasdichtheit, da ein Abheben des Randes des Luftsackmundes von der Anlagefläche verhindert wird.

Der komplementäre Vorsprung braucht dabei nicht unbedingt umlaufend ausgebildet zu sein. Es ist jedoch bevorzugt, dass der komplementäre Vorsprung als um den Grundkörper umlaufender Flansch ausgebildet ist. Hierdurch können zum einen besser Kräfte auf diesen übertragen werden, was insbesondere dann von Bedeutung ist, wenn der Luftsack bei einer Entfaltung gegen den komplementären Luftsack gezogen wird. Dies ist weiterhin von Bedeutung, wenn der Luftsackhalter zur Befestigung eines toroidalen Luftsacks mit zwei Luftsackmündern oder mit nur einem Luftsackmund dient. Zum anderen kann so die Gasdichtigkeit der Befestigung verbessert werden.

Zur einfacheren Herstellbarkeit und Verbesserung der mechanischen Stabilität ist es bevorzugt, dass der Luftsackhalter einstückig ausgebildet ist. Insbesondere kann er als Spritzgussteil aus einem geeigneten Kunststoff, beispielsweise Polyamid, insbesondere Nylon, oder als Druckgussteil hergestellt sein.

Weiterhin ist es bevorzugt, dass der Luftsackhalter mit einem der Befestigung des Luftsackmoduls dienenden Trägerelement des Luftsackmoduls einstückig ausgebildet ist. Ein solches Luftsackmodul ist besonders einfach herstellbar, da der Luftsackhalter und das Trägerelement als ein einziges Spritzgussteil, beispielsweise aus einem Kunststoff, oder als

Druckgussteil herstellbar sind. Weiterhin ist bei der Montage nur ein Teil zu handhaben, so dass die Montage erheblich vereinfacht wird. Schließlich ergibt sich eine besonders stabile Befestigung des Luftsacks, da zwischen dem Luftsackhalter und dem Träger keine weiteren Verbindungsstellen auftreten.

Bevorzugt sind der Luftsackhalter, besonders bevorzugt auch das Trägerelement, und der Luftsack aus dem gleichen Stoff gebildet. Hierbei kann es sich besonders bevorzugt um einen Kunststoff, insbesondere um Polyamid, vorzugsweise Nylon, handeln. Solche Luftsackmodule sind besonders einfach dem Recycling zuzuführen.

Besonders bevorzugt weist dabei der Luftsackhalter und/oder das Trägerelement eine Kammer zur Aufnahme eines Gasgenerators des Luftsackmoduls auf. Diese Ausbildung erlaubt einen besonders kompakten Aufbau des erfindungsgemäßen Luftsackmoduls.

Weiterhin kann der Luftsackhalter bevorzugt wenigstens teilweise als Diffusor ausgebildet sein, durch den aus einem Gasgenerator austretendes Gas in den Luftsack geleitet wird. Hierzu kann der Grundkörper beispielsweise entsprechende Gasaustrittsöffnungen aufweisen. Auch hier ergibt sich ein besonders einfacher und kompakter Aufbau des erfindungsgemäßen Luftsackmoduls.

Die erfindungsgemäßen Luftsackmodule können insbesondere konventionelle Luftsäcke mit einem Luftsackmund oder auch toroidale Luftsäcke mit zwei Luftsackmündern aufweisen. Dementsprechend sind die erfindungsgemäßen Verfahren zur Verwendung mit entsprechenden Luftsäcken geeignet.

Es ist bevorzugt, dass der Luftsackhalter einen an den Umfang des Grundkörpers in axialer Richtung gegenüber dem Vorsprung versetzten weiteren Vorsprung aufweist, und dass der Luftsack ein toroidaler Luftsack mit einem weiteren Luftsackmund ist, der einen in einer Endlage den Grundkörper umschließenden und den weiteren Vorsprung hintergreifenden Rand aufweist, und dessen Umfangskontur kleiner ist als eine Umfangskontur um einen Querschnitt durch den Grundkörper und den weiteren Vorsprung. Ein solches Luftsackmodul, das sich insbesondere zur Verwendung für einen Lenkrad- bzw. Fahrerairbag eignet, zeichnet sich durch eine besonders einfache Befestigung des Luftsacks aus. Dabei können die Befestigungen der beiden Luftsackmünder jeweils mit gleichen oder auch unterschiedlichen erfindungsgemäßen Verfahren erfolgen.

Die Erfindung wird nun weiter beispielhaft anhand der Zeichnungen erläutert. Es zeigen:
- Fig. 1: eine schematische Schnittansicht durch ein Luftsackmodul nach einer ersten bevorzugten Ausführungsform der Erfindung,
- Fig. 2: eine perspektivische Ansicht eines Trägerelements mit einem Luftsackhalter des Luftsackmoduls in Fig. 1 mit Rändern eines Luftsacks des Luftsackmoduls in Fig. 1,

- Fig. 3: eine schematische, teilweise Schnittansicht durch das Luftsackmodul in Fig. 1 mit entfaltetem Luftsack,
- Fig. 4: eine Draufsicht auf eine Abdeckung und eine Nabenabdeckung des Luftsackmoduls in Fig. 1,
- Fig. 5A bis C: teilweise, perspektivische Ansichten des Luftsackhalters in Fig. 1 während verschiedener Stadien der Befestigung des Luftsacks auf dem Luftsackhalter,
- Fig. 6: eine schematische teilweise geschnittene Ansicht des Luftsackmoduls in Fig. 1 während der Befestigung des Luftsacks an einem gasgeneratorseitigen Luftsackhalterabschnitt,
- Fig. 7: eine schematische Draufsicht auf einen Vorsprung eines Luftsackhalters eines Luftsackmoduls nach einer zweiten bevorzugten Ausführungsform der Erfindung,
- Fig. 8: eine schematische, teilweise Seitenansicht eines Luftsackhalters eines Luftsackmoduls nach einer dritten bevorzugten Ausführungsform der Erfindung,
- Fig. 9: eine schematische, teilweise Schnittansicht eines Luftsackhalters eines Luftsackmoduls nach einer vierten bevorzugten Ausführungsform der Erfindung mit einer konischen Anlagefläche,

- Fig. 10: eine schematische Schnittansicht durch einen Rand eines Luftsacks eines Luftsackmoduls nach einer fünften bevorzugten Ausführungsform der Erfindung,
- Fig. 11: eine schematische Draufsicht auf einen Luftsackhalter eines Luftsackmoduls nach einer sechsten bevorzugten Ausführungsform der Erfindung mit einem daran befestigten Luftsack,
- Fig. 12: eine schematische, teilweise Schnittansicht durch einen Luftsackhalter eines Luftsackmoduls nach einer siebten bevorzugten Ausführungsform,
- Fig. 13A, B und C: schematische Draufsichten auf den Luftsackhalter in Fig. 12 und einen Luftsack des Luftsackmoduls in Fig. 12 in aufeinander folgenden Stadien der Befestigung des Luftsacks an dem Luftsackhalter,
- Fig. 14: eine schematische, teilweise Schnittansicht durch einen Luftsackhalter und einen Luftsack bei dessen Befestigung an dem Luftsackhalter mit einem Befestigungsverfahren nach einer achten bevorzugten Ausführungsform der Erfindung,
- Fig. 15: eine schematische Draufsicht auf den Luftsackhalter und den Luftsack in Fig. 14,

- Fig. 16: eine schematische, teilweise Schnittansicht eines Randbereichs eines Vorsprungs eines Luftsackhalters eines Luftsackmoduls nach einer neunten bevorzugten Ausführungsform der Erfindung mit einem Rand eines Luftsackmundes eines Luftsacks,
- Fig. 17: eine schematische, teilweise Schnittansicht eines Randbereichs eines Vorsprungs eines Luftsackhalters und eines Randes eines Luftsackmundes eines Luftsacks eines Luftsackmoduls nach einer zehnten bevorzugten Ausführungsform der Erfindung,
- Fig. 18: eine schematische, teilweise Schnittansicht eines Luftsackmoduls nach einer elften bevorzugten Ausführungsform der Erfindung, und
- Fig. 19: eine schematische, teilweise Schnittansicht eines Luftsackmoduls nach einer zwölften bevorzugten Ausführungsform der Erfindung.

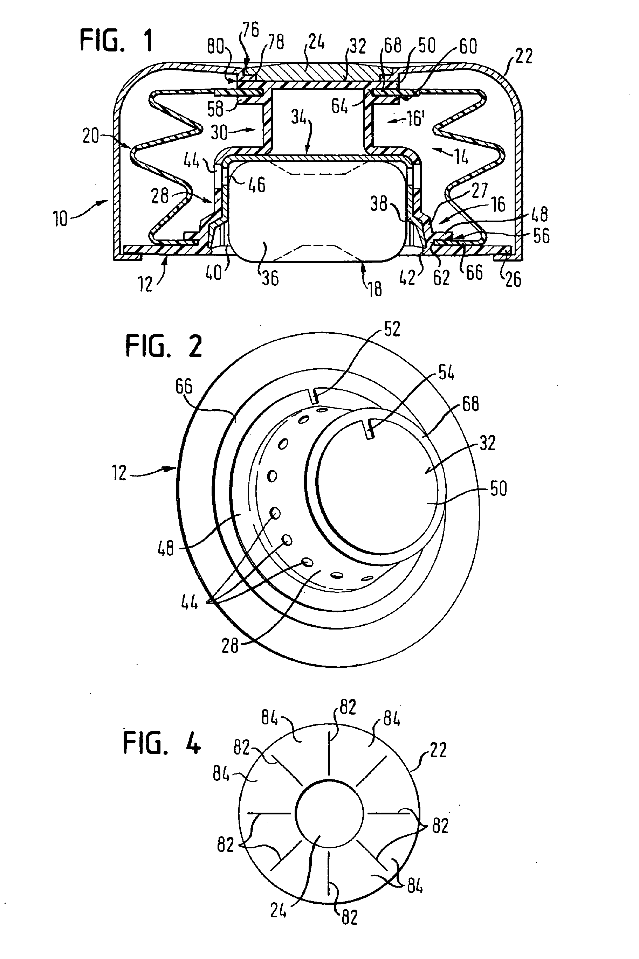

In Fig. 1 weist ein Luftsackmodul 10 nach einer ersten bevorzugten Ausführungsform der Erfindung ein Trägerelement 12 mit einem einstückig daran ausgebildeten Luftsackhalter 14 mit Luftsackhalterabschnitten 16 und 16', einen Gasgenerator 18, einen Luftsack 20, eine Abdeckung 22 und eine Nabenabdeckung 24 auf.

Das im Wesentlichen rotationssymmetrische, einstückig als Spritzgussteil aus Polyamid ausgebildete Trägerelement 12 dient unter anderem zur

Befestigung des Luftsackmoduls 10. Es weist nahe einem flanschartig ausgebildeten Boden 26 einen weiten, bis auf einen bodenseitigen, kegelstumpfförmigen Aufweitungsabschnitt 27 hohlzylindrischen Aufnahmeabschnitt 28 auf, an den sich ein hohlzylindrischer Halteabschnitt 30 mit geringerem Innen- und Außendurchmesser anschließt. Der Halteabschnitt 30 ist an seinem freien Ende verschlossen, wobei an der entstehenden Abschlussfläche 32 die Nabenabdeckung 24 gehalten ist.

Der Aufnahmeabschnitt 28 bildet so eine Kammer 34, in der der Gasgenerator 18 angeordnet ist. Der Gasgenerator 18 weist eine konventionelle Druckeinheit 36 auf, mittels derer Gas zum Aufblasen des Luftsacks 20 erzeugbar ist oder in der Gas komprimiert gespeichert ist. Die Druckeinheit 36 ist in eine topfartige, aus einem Metall gefertigte Gasgeneratoraufnahme 38 eingeschweißt, deren Rand kranzartig angeordnete, nach außen federnde Zungen 40 aufweist, die hinter einer Hinterschneidung 42 am bodenseitigen Ende einer Innenwand des hohlzylindrischen Aufnahmeabschnitts 28 eingerastet sind. Der Gasgenerator 18 ist so zwischen der Hinterschneidung 42 und einer zwischen dem hohlzylindrischen Bereich des Aufnahmeabschnitts 28 und dem kegelstumpfförmigen Aufweitungsabschnitt 27 gebildeten Schulter gehalten.

Die Gasgeneratoraufnahme 38 wie auch der Aufnahmeabschnitt 28 weisen entlang ihres Umfangs angeordnete, miteinander fluchtende Gasdurchtrittsöffnungen 44 bzw. 46 auf, durch die von der Druckeinheit 36 abgegebenes Gas in den Luftsack 20 führbar ist. Der Aufnahmeabschnitt 28 dient somit auch als Diffusor.

Oberhalb des Bodens 26 und fluchtend mit der Abschlussfläche 32 sind um den Aufnahmeabschnitt 28 bzw. den Halteabschnitt 30 umlaufende Vorsprünge 48 und 50 mit einer kreisförmigen Umfangskontur ausgebildet, die jeweils die Form eines Flanschs haben. In den Vorsprüngen 48 und 50 sind radial verlaufende, orthogonal zu der Fläche der Vorsprünge 48 und 50 durch diese hindurchtretende Ausnehmungen 52 bzw. 54 in Form von Schlitzen ausgebildet, die radial jeweils bis zum Außenumfang des Aufnahmeabschnitts 28 bzw. des Halteabschnitts 30 reichen (vgl. Fig. 2).

Der Vorsprung 48 ist so nahe zu dem Boden 26 angeordnet, dass der nahe dem Aufnahmeabschnitt 28 als umlaufender Flansch ausgebildete Boden 26 mit dem Vorsprung 48 eine Nut 56 vorgegebener Weite bildet. Insoweit bildet der Boden 26 einen zu dem Vorsprung 48 komplementären Vorsprung.

Auf einer dem Gasgenerator 18 zugewandten ersten Seite des Vorsprungs 50 ist ein flanschartig ausgebildeter, umlaufender komplementärer Vorsprung 58 so angeordnet, dass der Vorsprung 50 und der komplementäre Vorsprung 58 eine Nut 60 bilden, deren Weite gleich der der Nut 56 ist.

Der Aufnahmeabschnitt 28 als Grundkörper mit dem Vorsprung 48 und dem Boden 26 sowie der Halteabschnitt 30 als Grundkörper mit dem Vorsprung 50 und dem komplementären Vorsprung 58 bilden voneinander unabhängige Luftsackhalterabschnitte 16 bzw. 16' des Luftsackhalters 14.

Der nur sehr schematisch gezeigte, in Fig. 1 gefaltete toroidale Luftsack 20 weist zwei Luftsackmünder 62 und 64 auf, die jeweils einen Rand 66 bzw. 68 aufweisen.

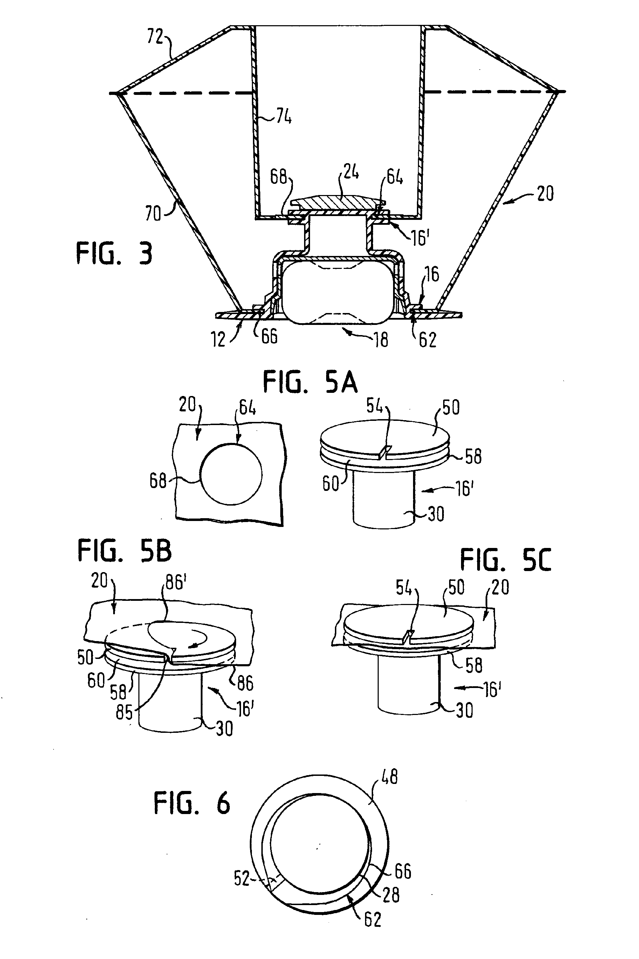

Der Luftsack 20 ist aus drei Luftsackteilen 70, 72 und 74 aus Polyamid, das dem Polyamid des Trägerelements 12 entspricht, zusammengenäht (vgl. Fig. 3). Die scheibenförmigen Luftsackteile 70 und 72 weisen in ihrer Mitte jeweils kreisförmige Öffnungen auf und sind entlang ihres äußeren Umfangs gasdicht zusammengenäht. Der Luftsackteil 74 ist röhrenförmig ausgebildet und entlang eines Randes mit dem Luftsackteil 72 vernäht. Die Öffnung in dem Luftsackteil 70 und der freie Rand des Luftsackteils 74 bilden die Luftsackmünder 62 bzw. 64.

Der Luftsack 20 ist in einer Endlage relativ zu dem Luftsackhalter 14 angeordnet, in der der Luftsack in einer gebrauchsbereiten Lage ist. Die Ränder 66 bzw. 68 der Luftsackmünder 62 bzw. 64 sind dabei in den Nuten 56 bzw. 60 angeordnet und hintergreifen so jeweils die Vorsprünge 48 bzw. 50.

Die Weiten der Nuten 56 bzw. 60 und damit die Abstände des Vorsprungs 48 von dem als komplementärer Vorsprung dienenden Boden 62 bzw. des Vorsprungs 50 von dem komplementären Vorsprung 58 sind so gewählt, dass die Ränder 66 bzw. 68 der Luftsackmünder 62 bzw. 64 im Wesentlichen ohne Spiel in den Nuten 56 bzw. 60 gehalten sind, wobei sich die Ränder 66 bzw. 68 in den Nuten 56 bzw. 60 ohne erheblichen Kraftaufwand verschieben lassen.

Die Durchmesser der Luftsackmünder 62 und 64 sind dabei nur wenig größer als die entsprechenden Außendurchmesser des Aufnahmeabschnitts 28 bzw. des hohlzylindrischen Halteabschnitts 30, jedoch kleiner als die Außendurchmesser der Vorsprünge 48 bzw. 50. Die im unverformten Zustand kreisförmige Umfangskontur der Luftsackmünder 62 und 64 ist daher kleiner als die kreisförmige, einhüllende Umfangskontur der Vorsprünge 48 bzw. 50 mit dem Aufnahmeabschnitt 28 bzw. dem Halteabschnitt 30 sowie des Bodens 26 bzw. des komplementären Vorsprungs 58. Der Unterschied in den Durchmessern der Luftsackmünder 62 bzw. 64 und der Vorsprünge 48 bzw. 50 ist dabei derart gewählt, dass bei Entfalten des Luftsacks 20 durch Gas des Gasgenerators 18 die Luftsackmünder 62 und 64 hinter den Vorsprüngen 48 bzw. 50 gehalten werden. Dabei ist die Dehnbarkeit des Luftsackmaterials zu berücksichtigen. Weiterhin sind die Durchmesser des Aufnahmeabschnitts 28, des Halteabschnitts 30, der entsprechenden Vorsprünge 48 bzw. 50 und der entsprechenden Luftsackmünder 62 bzw. 64 und die Tiefen der Ausnehmungen 52 bzw. 54 so gewählt, dass der Luftsack 20 an dem Luftsackhalter 14 mit dem weiter unten geschilderten Verfahren nach der ersten bevorzugten Ausführungsform der Erfindung befestigbar ist.

Beispielsweise kann bei Verwendung eines Luftsacks aus konventionellem Polyamid-Gewebe, insbesondere Nylon-Gewebe, der Außendurchmesser des Vorsprungs 50 100mm und der des Halteabschnitts 30 80mm betragen, während der Durchmesser des Luftsackmundes 64 etwa 83,5 mm beträgt. Bei einem im Wesentlichen gleichmäßigen Zug während der Entfaltung des Luftsacks 20 müsste der Luftsackmund 64 um 20% gedehnt werden, um über den Vorsprung 50 gezogen zu werden. Eine solche Dehnung ist jedoch bei einer Entfaltung des Luftsacks nicht erreichbar.

Die Abdeckung 22 aus Polyamid ist haubenartig ausgebildet und weist in der Mitte der Haube eine kreisrunde Öffnung 76 auf, deren gekröpfter Rand 78 in eine von der Nabenabdeckung 24, die das Emblem eines Fahrzeugherstellers tragen kann, und dem Vorsprung 50 gebildeten Nut 80 greift. Radial von der Öffnung 76 ausgehend sind in dem im Wesentlichen parallel zu dem Boden 62 verlaufenden Bereich der Abdeckung 22 radial verlaufende Sollbruchlinien 82 ausgebildet (vgl. Fig. 4).

Bei einer Auslösung des Luftsackmoduls 10 wird in der Druckeinheit 36 bzw. dem Gasgenerator 18 Gas expandiert und durch den als Diffusor dienenden Aufnahmeabschnitt 28 in den gefalteten Luftsack 20 geblasen. Der gefaltete Luftsack 20 wird hierdurch entfaltet, wobei er gegen die Abdeckung 22 gepresst wird. Hierdurch wird der Rand 78 aus der Nut 80 gezogen. Bei einer weiteren Entfaltung des Luftsacks 20 reißt die Abdeckung 22 entlang der Sollbruchlinien 82 unter Ausbildung von radialen Abdeckungszungen 84 zwischen den Sollbruchlinien 82 und die gebildeten Abdeckungszungen 84 werden nach oben und außen gebogen, wodurch eine weitere freie Entfaltung des Luftsacks 20 ermöglicht wird. Gleichzeitig werden die Luftsackmünder 62 und 64 hinter den entsprechenden Vorsprüngen 48 und 50 gehalten, wobei die Luftsackmünder 62 und 64 im Wesentlichen gleichmäßig radial gespannt werden.

Um den Luftsack 20 an dem Luftsackhalter 14 bzw. den Luftsackhalterabschnitten 16 bzw. 16' befestigen zu können, weisen die Vorsprünge 48 bzw. 50 die Ausnehmungen 52 bzw. 54 in Form von radial verlaufenden Schlitzen auf. Die Weite der Ausnehmungen 52 bzw. 54 ist im Beispiel gleich groß und so gewählt, dass der Rand der Luftsackmünder 62 und 64 durch die Ausnehmungen 52 bzw. 54 führbar ist. Sie kann beispielsweise 1mm größer sein als die Dicke der Ränder 66 bzw. 68.

Die Befestigung des Luftsacks ist der besseren Darstellbarkeit wegen schematisch in den Fig. 5A bis 5C am Beispiel des Luftsackmundes 64 und des Vorsprungs 50 gezeigt, obwohl tatsächlich der Luftsackmund 62 zuerst befestigt wird.

Der Luftsackmund 64 wird mit einem Einführabschnitt 85 seines Randes 68 in die Ausnehmung 54 des Vorsprungs 50 eingeführt, so dass zu diesem benachbarte erste und zweite Abschnitte 86 und 86' auf einer ersten, dem komplementären Vorsprung 80 zugewandten Seite bzw. einer zweiten, der ersten gegenüberliegenden Seite des Vorsprungs angeordnet sind (vgl. Fig. 5B). Aus dieser Anfangslage heraus wird das Trägerelement 12 mit dem Luftsackhalter 14 gedreht, so dass der Rand 68 des Luftsackmundes 64 des Luftsacks 20 im Verlauf der Drehung vollständig hinter den Vorsprung 50 in die Endlage geführt wird (vgl. Fig. 5C). Da der Luftsackhalter oberhalb des Vorsprungs 50 endet, kann der Abschnitt 86 bereits ohne Drehung über eine längere Strecke in die Nut 60 eingeführt werden, so dass die Drehung nicht über 360° erfolgen muss.

Der Luftsackmund 62 wird in entsprechender Weise an dem durch den Vorsprung 48, den Boden 26 und den Aufnahmeabschnitt 28 als Grundkörper gebildeten Luftsackhalterabschnitt 16 befestigt. Wie in Fig. 6 gezeigt wird hierbei zunächst nur ein kleiner erster Abschnitt des Randes 66 unter den Vorsprung 48 geführt, da der Luftsackmund 62 durch das Vorhandensein des Aufnahmeabschnitts 28 auf der dem Boden 26 abgewandten Seite des Vorsprungs 48 nur begrenzt bewegbar ist. Durch eine

Drehung des Trägerelements 12 und damit des Luftsackhalters 14 um im Wesentlichen 360° wird der Rand 66 dann vollständig hinter den Vorsprung 48 bewegt.

Bei einer zweiten bevorzugten Ausführungsform der Erfindung unterscheidet sich ein Luftsackmodul von dem Luftsackmodul des ersten Ausführungsbeispiels durch die Ausbildung der Ausnehmung in den Vorsprüngen 48 und 50 und des Luftsacks 20. Für alle anderen Komponenten gelten weiterhin die Ausführungen zu dem ersten Ausführungsbeispiel und es werden die gleichen Bezugszeichen verwendet.

Der Luftsack unterscheidet sich von dem Luftsack 20 dadurch, dass er aus einem beschichteten Gewebe hergestellt ist, dessen Beschichtung zu einer Verstärkung des Randes im Bereich des Luftsackmundes führt.

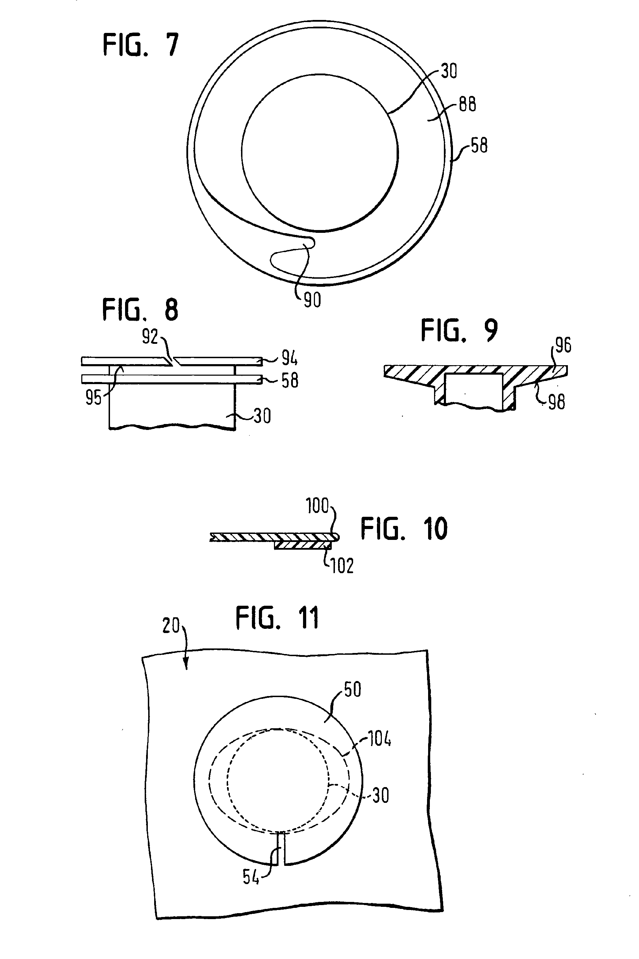

In Fig. 7 grob schematisch für einen dem Vorsprung 50 entsprechenden Vorsprung 88 gezeigt, weist der als Flansch ausgebildeter Vorsprung 88, der wie der Vorsprung 50 zwei parallele, ebene Flanschflächen aufweist, eine zu einer Tangente um eine kreisförmige einhüllende Umfangskontur des Vorsprungs 88 geneigt verlaufende Ausnehmung 90 in Form einer Einbuchtung auf, die ein Einführen des Luftsacks in die Ausnehmung 90 und eine weitere Drehung des Luftsacks relativ zu dem durch den Vorsprung 88, den komplementären Vorsprung 58 und den hohlzylindrischen Halteabschnitt 30 als Grundkörper gebildeten Luftsackhalterabschnitt 16' erlaubt.

Der dem Vorsprung 50 entsprechende, in Fig. 7 nicht gezeigte Vorsprung 48 weist eine entsprechend geformte Ausnehmung auf.

Bei einer dritten bevorzugten Ausführungsform der Erfindung unterscheidet sich ein Luftsackmodul von dem Luftsackmodul des ersten Ausführungsbeispiels durch eine Ausnehmung 92 in einem dem Vorsprung 50 entsprechenden Vorsprung 94, die die Form eines Schlitzes aufweist und der Ausnehmung 54 des ersten Ausführungsbeispiels entspricht. Für alle anderen Komponenten des Luftsackmoduls gelten die gleichen Ausführungen wie im ersten Ausführungsbeispiel und es werden die gleichen Bezugszeichen verwendet.

In dem Vorsprung 94 verläuft nun die Ausnehmung 92 bzw. der Schlitz nicht wie in dem ersten Ausführungsbeispiel parallel zu einer Normalen auf eine Anlagefläche 95 des Vorsprungs 50 bzw. des Vorsprungs 94, an der der Rand 68 bei Zug auf den Luftsack 20 anliegt, sondern zu dieser geneigt (vgl. Fig. 8). Hierdurch wird bei einer Befestigung des Luftsacks 20 eine starke Deformation des durch die Ausnehmung 92 bzw. den Schlitz geführten Luftsacks vermieden. Eine solche Ausnehmung kann unabhängig auch in dem Vorsprung 48 vorgesehen sein.

Bei einer vierten bevorzugten Ausführungsform der Erfindung unterscheidet sich ein Luftsackmodul von dem Luftsackmodul in dem ersten Ausführungsbeispiel wiederum durch die Ausbildung eines Vorsprungs 96, der dem Vorsprung 50 entspricht. Die anderen Komponenten des Luftsackmoduls sind wie die Komponenten des Luftsackmoduls des ersten Ausführungsbeispiels ausgebildet, so dass für diese die gleichen Ausführungen gelten und die gleichen Bezugszeichen wie in dem ersten Ausführungsbeispiel verwendet werden.

Der in Fig. 9 gezeigte, dem Vorsprung 50 entsprechende Vorsprung 96 weist eine konisch ausgebildete Anlagefläche 98 auf, an der der Rand 68 des Luftsacks 20 bei Zug auf den Luftsack in Richtung des Vorsprungs 96 flächig anliegt. Bei einem solchen Zug in Richtung auf den Vorsprung 96 zu wird der Luftsackmund 64 daher von selbst an dem Vorsprung 96 zentriert, so dass sich eine gasdichte Anlage ergibt. Auch der Vorsprung 48 kann entsprechend ausgebildet sein.

Bei einem fünften Ausführungsbeispiel unterscheidet sich ein Luftsackmodul von dem Luftsackmodul in dem ersten Ausführungsbeispiel durch die Ausbildung eines Randes 100 des Luftsackmundes 64, der dem Rand 68 des Luftsackmundes 64 in dem ersten Ausführungsbeispiel entspricht. Für die anderen Komponenten gelten daher die gleichen Ausführungen wie im ersten Ausführungsbeispiel und es werden die gleichen Bezugszeichen verwendet.

Der in Fig. 10 gezeigte Rand 100 des Luftsackmundes 64 des Luftsacks 20 ist durch wenigstens eine Lage des Luftsacks gebildet, die mit einem aufgeschweißten, flachen Ring 102 verstärkt ist, der aus dem gleichen Kunststoffmaterial wie der Luftsack 20, also Polyamid bzw. Nylon, gebildet ist. Dieser Ring 102 kann durch Ultraschallschweißen mit der Lage des Luftsacks 20 verbunden werden. Hierdurch wird eine Verstärkung des Randes 100 gegen Dehnungen entlang des Randes 100 erreicht. Alternativ kann der Ring auch mit dem Luftsack ein- oder mehrfach vernäht sein, wobei bei einem hinreichend flachen Ring die Stiche auch direkt durch den Ring führen können.

Bei einer sechsten Ausführungsform der Erfindung unterscheidet sich ein Luftsackmodul von dem Luftsackmodul des ersten Ausführungsbeispiels durch die Form eines Luftsackmundes 104, der dem Luftsackmund 50 des Luftsacks des ersten Ausführungsbeispiels entspricht. Für alle anderen Komponenten des Luftsackmoduls gelten die gleichen Ausführungen wie für die des Luftsackmoduls des ersten Ausführungsbeispiels und es werden die gleichen Bezugszeichen verwendet.

Der Luftsackmund 104 weist nun eine elliptische Form auf, wobei die kleine Hauptachse der Ellipse länger ist als der Durchmesser des hohlzylindrischen Halteabschnitts 30, aber kürzer als der Außendurchmesser des Vorsprungs 50 (vgl. Fig. 11). Die Länge der längeren Hauptachse der Ellipse ist nur wenig, beispielsweise 1 mm, größer als der Durchmesser des hohlzylindrischen Halteabschnitts 30 und kleiner als der Außendurchmesser des Vorsprungs 50.

Zur Befestigung wird der Luftsackmund 104 so in die Ausnehmung 54 eingeführt, dass die längere Hauptachse im Wesentlichen parallel zu der Ausnehmung 54, die als radialer Schlitz ausgebildet ist, verläuft. Der Rand des Luftsackmundes 104 kann so schon ohne eine Drehung oder Dehnung sehr weit hinter den Vorsprung 50 bewegt werden.

Aus dieser Anfangslage wird das Trägerelement 48 mit dem als Grundkörper dienenden hohlzylindrischen Halteabschnitt 30 nun relativ zu dem Luftsack 20 gedreht, bis der Luftsackmund 104 vollständig hinter dem Vorsprung 50 angeordnet ist und die kürzere Hauptachse der Ellipse im Wesentlichen parallel zu der Ausnehmung 54 angeordnet ist. In dieser Endlage ist die Ausnehmung 54 weitgehend durch den Luftsack 20 abgedeckt, während die elliptische Form gleichzeitig die Befestigung an dem Luftsackhalterabschnitt 16' erleichtert.

Auch der Luftsackmund 62 kann entsprechend elliptisch ausgebildet sein.

Bei einer siebten Ausführungsform der Erfindung unterscheidet sich ein Luftsackmodul von dem Luftsackmodul des ersten Ausführungsbeispiels durch einen Vorsprung 106, der dem Vorsprung 50 des Luftsacks des ersten Ausführungsbeispiels entspricht. Für alle anderen Komponenten des Luftsackmoduls gelten die gleichen Ausführungen wie für die des Luftsackmoduls des ersten Ausführungsbeispiels und es werden die gleichen Bezugszeichen verwendet.

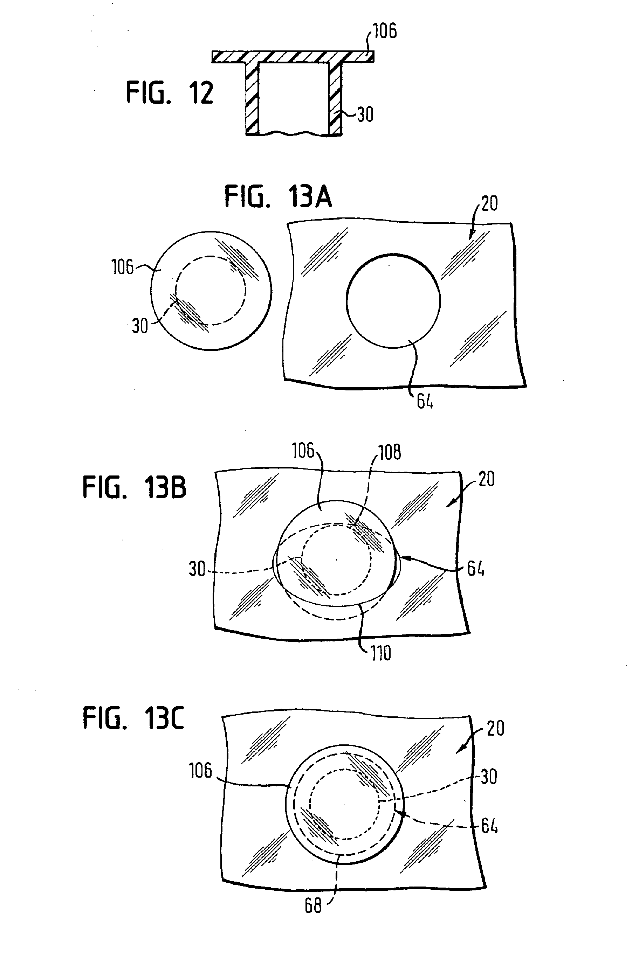

Der Vorsprung 106 unterscheidet sich von dem Vorsprung 50 in dem ersten Ausführungsbeispiel dadurch, dass keine Ausnehmung vorgesehen ist und der Außendurchmesser anders gewählt ist. Der Vorsprung 106 ist also als vollständig umlaufender Flansch ausgebildet (vgl. Fig. 12, 13A).

Der im nicht verformten Zustand kreisförmige Luftsackmund 64 weist einen Durchmesser auf, der größer ist, als der Außendurchmesser des Halteabschnitts 30 und kleiner als der Außendurchmesser des Vorsprungs 106. Die Umfangskontur des Luftsackmundes 64 ist daher kleiner als die des Vorsprungs 106 (vgl. auch Fig. 13C).

Weiterhin sind der Durchmesser des Luftsackmundes 64 und die Außendurchmesser des Vorsprungs 106 und des Halteabschnitts 30 so in Abhängigkeit voneinander gewählt, dass die im Folgenden beschriebenen

Verfahrensschritte zur Befestigung des Luftsacks 20 hinter dem Vorsprung 106 an dem Luftsackhalter 14 durchführbar sind.

Zur in den Fig. 13A bis 13C veranschaulichten Befestigung des Luftsacks 20 an dem Luftsackhalter 14 wird der Luftsackmund 64 zu einer ellipsenähnlichen Form verformt und mit einem ersten Abschnitt 108 hinter den Vorsprung 106 auf eine erste Seite des Vorsprungs 106 bewegt. Ein zu dem ersten Abschnitt 108 komplementärer zweiter Abschnitt 110 ist dabei auf einer vorderen, der ersten Seite abgewandten, zweiten Seite des Vorsprungs 106 angeordnet (vgl. Fig. 13B).

Der sich auf der zweiten Seite des Vorsprungs 106 befindende komplementäre Abschnitt 110 des Randes 68 des Luftsackmundes 64 wird nun über die entsprechende Kante des Vorsprungs 106 gezogen, wobei der erste Abschnitt 108 des Randes 68 gegen den Halteabschnitt 30 gezogen wird (vgl. Fig. 13B).

Der Durchmesser des Luftsackmundes 64 ist gerade so gewählt, dass der zweite Abschnitt 110 des Luftsackmundes 64 im Wesentlichen ohne eine erhebliche Dehnung des Luftsackmundes 64 über den Vorsprung 106 hinweg bewegbar ist.

Der Luftsackmund 64 befindet sich nun hinter dem Vorsprung 106, wobei der Rand 68 des Luftsackmundes 64 den Vorsprung 106 in der so erreichten Endlage hintergreift (vgl. Fig. 13C) und eine Bewegung des Luftsackmundes 64 über den Vorsprung 106 verhindert.

Auch der Vorsprung 48 kann entsprechend ausgebildet sein, so dass der Luftsackmund 62 mit einem entsprechenden Verfahren daran befestigbar ist.

Bei einer achten bevorzugten Ausführungsform der Erfindung ist ein Luftsackmodul bis auf den Durchmesser eines dem Luftsackmund 64 entsprechenden Luftsackmundes 112 ausgebildet wie das Luftsackmodul nach der siebten bevorzugten Ausführungsform der Erfindung. Für gleiche Komponenten werden daher die gleichen Bezugszeichen verwendet und es gelten die Ausführungen in Bezug auf diese Komponenten entsprechend auch für dieses Ausführungsbeispiel.

Der Luftsackmund 112 hat nun einen Durchmesser, der wie im vorhergehenden Ausführungsbeispiel kleiner ist als der Durchmesser des Vorsprungs 106 bzw. größer als der Außendurchmesser des Halteabschnitts 30. Der Durchmesser des Luftsackmundes 112 ist jedoch so gewählt, dass zur Befestigung des Luftsacks hinter dem Vorsprung 106 der Luftsackmund 112 gedehnt werden muss.

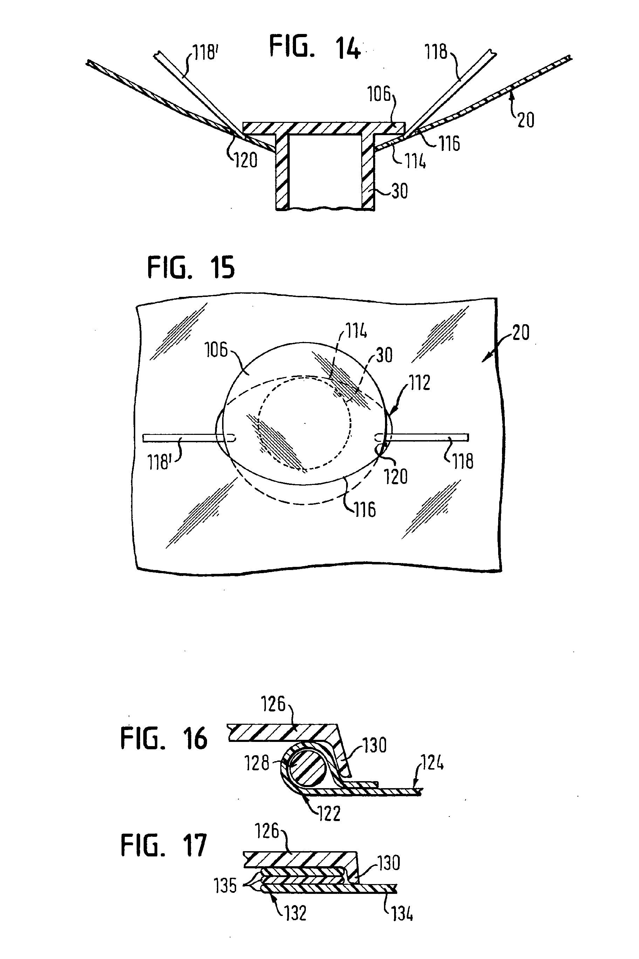

Wie in dem vorhergehenden Ausführungsbeispiel wird zur Montage des Luftsacks 20 an dem Luftsackhalter 14 der Luftsackmund 112 nach einer ellipsenartigen Verformung auf den Halteabschnitt 30 und mit einem ersten Abschnitt 114 hinter den Vorsprung 106 bewegt. Ein zweiter, zu dem ersten Abschnitt 114 komplementärer Abschnitt 116 ist dabei auf einer vorderen, zweiten Seite des Vorsprungs 106 angeordnet (vgl. Fig. 14 und 15).

Um den Luftsackmund 112 dehnen zu können, werden nun zwei Hebelwerkzeuge 118 und 118' zwischen einen Rand 120 des Luftsackmundes 112 und den Vorsprung 106 in dem Bereich geführt, in dem der Rand 120 des Luftsackmundes 112 von der ersten Seite des Vorsprungs 106 her an eine entsprechende Kante des Vorsprungs 106 anstößt.

Durch eine Relativbewegung der Hebelwerkzeuge 118 und 118' aufeinander zu wird der Luftsackmund 112 gedehnt und der Abschnitt 116 gleichzeitig hinter den Vorsprung 106 geführt.

Befindet sich der gesamte Rand 120 des Luftsackmundes 112 hinter dem Vorsprung 106, werden die Hebelwerkzeuge 118 und 118' entfernt, so dass sich im Wesentlichen ein analoges Bild wie in Fig. 13C ergibt.

Entsprechend kann auch der Luftsackmund 62 ausgebildet sein und an dem Luftsackhalterabschnitt 16 befestigt werden.

Bei einer neunten bevorzugten Ausführungsform der Erfindung unterscheidet sich ein Luftsackmodul von dem Luftsackmodul in dem siebten Ausführungsbeispiel nur durch die Ausbildung eines Randes 122 eines dem Luftsackmund 64 entsprechenden Luftsackmundes eines ansonsten dem Luftsack 20 entsprechenden Luftsacks 124 sowie die Ausbildung eines dem Vorsprung 106 entsprechenden Vorsprungs 126. Weiterhin fehlt der komplementäre Vorsprung 58. Für die anderen Komponenten des Luftsackmoduls gelten daher die gleichen Ausführungen wie für das siebte Ausführungsbeispiel und es werden die gleichen Bezugszeichen verwendet.

Bei diesem Ausführungsbeispiel ist der Rand 122 des Luftsackmundes des Luftsacks 124 gegen Dehnungen tangential zum Rand 122 dadurch verstärkt, dass ein flexibler Verstärkungsring 128 aus dem gleichen Kunststoffmaterial wie der Luftsack 124 entlang des Randes 122 in eine Falte des Luftsacks 124 eingenäht ist (vgl. Fig. 16).

Der Vorsprung 126, der bis auf die Ausbildung seines Randbereichs dem Vorsprung 106 entspricht, weist an seinem Rand auf der ersten, dem Luftsack in der Endposition zugewandten Seite einen umlaufenden Kragen 130 auf, der ein Hinterschneidung bildet.

Die Höhe des Kragens 130 ist dabei so gewählt, dass der verstärkte Rand 122 des Luftsacks 124 in der Endposition bei Zug auf den Luftsack 124 gegen den Kragen 130 gezogen wird. Es wird so ein Abgleiten des Randes 122 des Luftsacks 124 von dem Vorsprung 106 vermieden.

Der Vorsprung 48 und der Rand 66 des Luftsackmundes 62 können entsprechend ausgebildet sein.

Bei einer zehnten bevorzugten Ausführungsform der Erfindung unterscheidet sich ein Luftsackmodul von einem Luftsackmodul nach der neunten bevorzugten Ausführungsform im Wesentlichen durch die Ausbildung eines Randes 132 eines Luftsackmundes eines Luftsacks 134. Für die anderen Komponenten des Luftsackmoduls gelten daher die gleichen Ausführungen wie für das neunte Ausführungsbeispiel und es werden die gleichen Bezugszeichen verwendet.

Der Rand 132 wird hier durch drei Ringe aus Luftsackmaterial bzw. -gewebe verstärkt, die aufeinander liegend angeordnet und mit einer oder mehreren Nähten miteinander und mit dem Luftsack 134 vernäht sind. (vgl. Fig. 17).

Der Kragen 130 des Vorsprungs 106 ist entsprechend der Stärke des Randes 132 weniger hoch als in dem vorhergehenden, neunten Ausführungsbeispiel.

Auch hier können der Vorsprung 48 und der Luftsackmund 62 entsprechend ausgebildet sein.

Die Vorsprünge in den ersten bis sechsten Ausführungsbeispielen können entsprechend denen in dem neunten und/oder zehnten Ausführungsbeispiel ausgebildet sein, wobei bei einstückiger Ausbildung des Halters 14 der komplemantäre Vorsprung 58 fehlen kann.

Weiterhin können die verschiedenen Arten der Verstärkungen des Luftsackmundes in dem zweiten, fünften, neunten und zehnten Ausführungsbeispiel miteinander kombiniert sein.

Bei einem elften Ausführungsbeispiel der Erfindung unterscheidet sich ein Luftsackmodul von dem Luftsackinodul des ersten Ausführungsbeispiels durch die Ausbildung des Luftsacks 20. Für die anderen Komponenten gelten die gleichen Ausführungen wie für die des ersten Ausführungsbeispiels und es werden die gleichen Bezugszeichen verwendet.

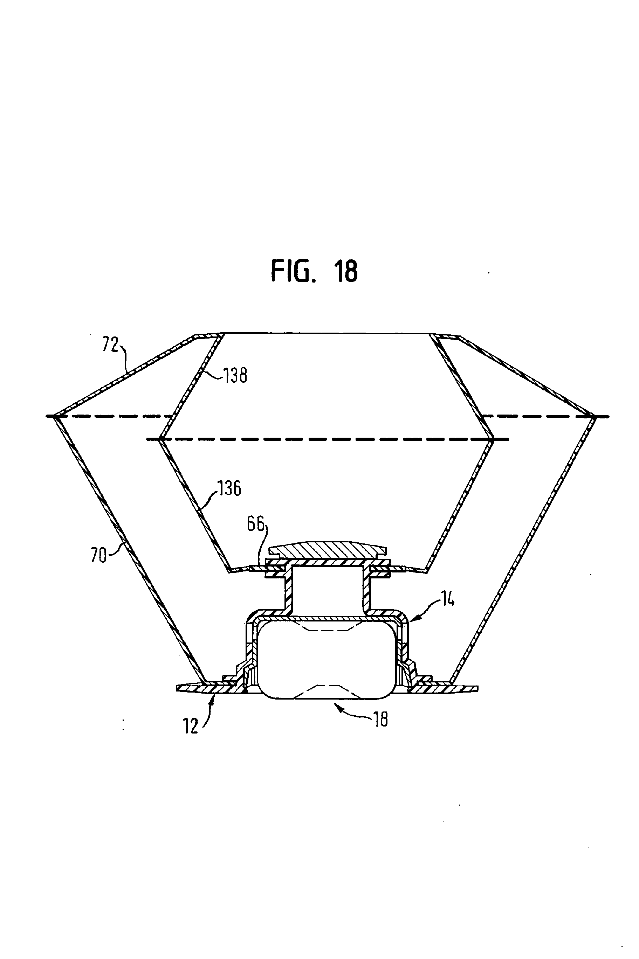

Statt des röhrenförmigen Luftsackteils 74 sind nun zwei scheibenförmige Luftsackteile 136 und 138, die jeweils in ihrer Mitte Öffnungen aufweisen, entlang ihres Außenumfangs aneinander genäht (vgl. Fig. 18). Die Öffnung des Luftsackteils 138 wird mit dem Luftsackteil 72 vernäht, während die Öffnung des Luftsackteils 136 den Luftsackmund 64 bildet, der an dem Luftsackhalter 14 befestigt wird.

Bei einem zwölften Ausführungsbeispiel der Erfindung unterscheidet sich ein Luftsackmodul von dem Luftsackmodul des ersten Ausführungsbeispiels wiederum durch die Ausbildung des Luftsacks 20. Für die anderen, gleichen Komponenten gelten daher die gleichen Ausführungen und es werden die gleichen Bezugszeichen verwendet, wie in dem ersten Ausführungsbeispiel.

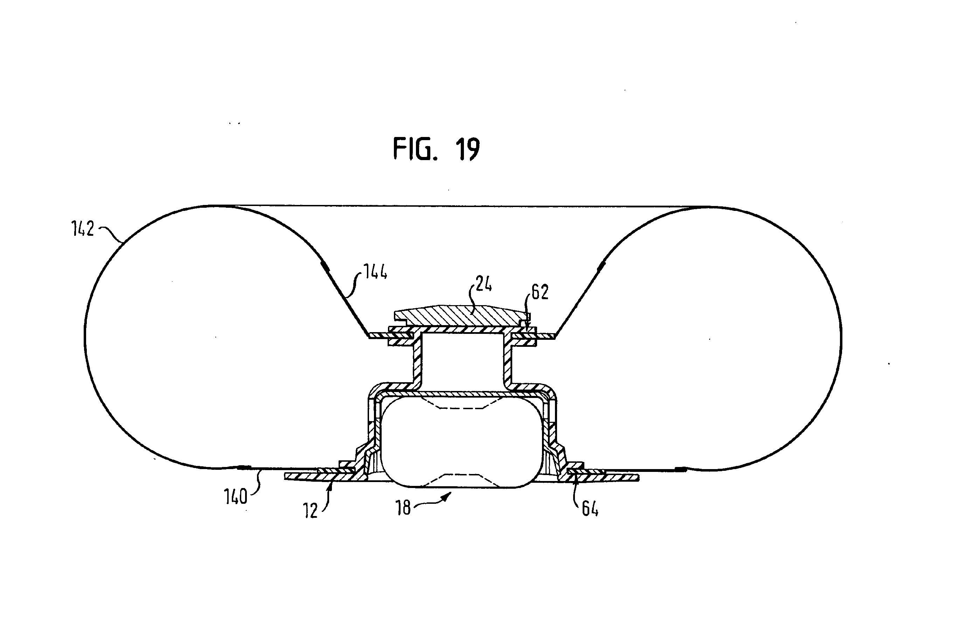

Der Luftsack ist durch drei Luftsackteile 140, 142 und 144 gebildet (vgl. Fig. 19).

Das Luftsackteil 142 ist zylindrisch ausgebildet, wobei der Durchmesser des Zylinders dem maximalen Durchmesser des aufgeblasenen Luftsacks entspricht. Die Luftsackteile 140 und 142 sind scheibenförmig, beispielsweise mit einem äußeren Durchmesser, der etwa einem Drittel des Durchmessers des zylindrischen Luftsackteils 142 entspricht, und mit zentralen Öffnungen ausgebildet. An den Rändern der Öffnungen des zylindrischen Luftsackteils 142 ist dieser jeweils mehrfach gefaltet und mit den äußeren Rändern der Luftsackteile 140 und 144 vernäht. Die Öffnungen in den Luftsackteilen 140 und 144 bilden dann die Luftsackmünder 62 bzw. 64.

Die Ausführungsbeispiele sind entsprechend auf Luftsäcke mit nur einem Luftsackmund übertragbar, wobei beispielsweise der Vorsprung 48 oder insbesondere der Vorsprung 50 und entsprechende Vorsprünge in anderen Ausführungsbeispielen entfallen können. Der Diffusor kann dann jeweils entsprechend ausgelegt werden, bei Verzicht auf den Vorsprung 48 beispielsweise durch Öffnungen in der Abschlussfläche 32.

### Bezugszeichenliste

- 10: Luftsackmodul
- 12: Trägerelement
- 14: Luftsackhalter
- 16, 16': Luftsackhalterabschnitt
- 18: Gasgenerator
- 20: Luftsack
- 22: Abdeckung
- 24: Nabenabdeckung
- 26: Boden
- 27: Aufweitungsabschnitt
- 28: Aufnahmeabschnitt
- 30: Halteabschnitt
- 32: Abschlussfläche
- 34: Kammer
- 36: Druckeinheit
- 38: Gasgeneratoraufnahme
- 40: Zungen
- 42: Hinterschneidung
- 44: Gasdurchtrittsöffnungen
- 46: Gasdurchtrittsöffnungen
- 48: Vorsprung
- 50: Vorsprung
- 52: Ausnehmung
- 54: Ausnehmung
- 56: Nut
- 58: komplementärer Vorsprung
- 60: Nut
- 62: Luftsackmund
- 64: Luftsackmund
- 66: Rand
- 68: Rand
- 70: Luftsackteil
- 72: Luftsackteil
- 74: Luftsackteil
- 76: Öffnung
- 78: Rand
- 80: Nut
- 82: Sollbruchlinien
- 84: Abdeckungszungen
- 85: Einführabschnitt
- 86,86': Abschnitte des Luftsackrandes
- 88: Vorsprung
- 90: Ausnehmung
- 92: Ausnehmung
- 94: Vorsprung
- 95: Anlagefläche
- 96: Vorsprung
- 98: Anlagefläche
- 100: Rand
- 102: Ring
- 104: Luftsackmund
- 106: Vorsprung
- 108: erster Abschnit
- 110: zweiter Abschnitt
- 112: Luftsackmund
- 114: erster Abschnitt
- 116: zweiter Abschnitt
- 118, 118': Hebelwerkzeuge
- 120: Rand
- 122: Rand
- 124: Luftsack
- 126: Vorsprung
- 128: Verstärkungsring
- 130: Kragen
- 132: Rand
- 134: Luftsack
- 135: Lagen
- 136: Luftsackteil
- 138: Luftsackteil
- 140: Luftsackteil
- 142: Luftsackteil

## Patentansprüche

1. Luftsackmodul mit
einem Luftsackhalter (14), der einen Grundkörper (28, 30) und einen auf einer Umfangsfläche des Grundkörpers (28, 30) um diesen, ganz oder bis auf wenigstens eine Unterbrechung umlaufenden Vorsprung (106; 126) aufweist, und
einem Luftsack (20; 124; 134), der einen Luftsackmund (62, 64; 104) aufweist, dessen Umfangskontur kleiner ist als eine den Vorsprung (106; 126) und den Grundkörper (28, 30) umschließende Umfangskontur und der an dem Luftsackhalter (14) in einer Endlage gehaltenen ist, in der der Luftsackmund (62, 64; 104) den Grundkörper (28, 30) umschließt und dabei den Vorsprung (106; 126) an einer ersten Seite des Vorsprungs (106; 126) hintergreift, wobei der Vorsprung (106; 126) und der Luftsackmund (62, 64; 104) so ausgebildet sind, dass zur Montage des Luftsacks (20; 124; 134) an dem Luftsackhalter (14) ein erster Abschnitt (108; 116) eines Randes (66, 68; 120; 122; 132) des Luftsackmundes (62, 64; 104) hinter den Vorsprung (106; 126) auf eine erste Seite des Vorsprungs (106; 126) führbar ist und dabei ein an den ersten Abschnitt (108; 116) angrenzender zweiter Abschnitt (110; 116) des Randes (66, 68; 120; 122; 132) auf einer der ersten Seite gegenüberliegenden, zweiten Seite des Vorsprungs (106; 126) angeordnet ist, und dass der Rand (66, 68; 120; 122; 132) dann durch eine Verformung in die Endlage hinein bewegbar ist.

2. Luftsackmodul nach Anspruch 1,
**dadurch gekennzeichnet,**
**dass** der Grundkörper (28, 30) mit dem Vorsprung (106; 126) einstückig so ausgebildet ist, dass der Luftsackmund (62, 64; 104) nicht zerstörungsfrei aus der Endlage heraus in einer Richtung entgegen dem Vorsprung (106; 126) von dem Grundkörper (28, 30) entfernbar ist.

3. Luftsackmodul mit
einem Luftsackhalter (14), der einen Grundkörper (28, 30) und einen an einer Umfangsfläche des Grundkörpers (28, 30) ausgebildeten Vorsprung (48, 50; 88; 94; 96) aufweist, und
einem Luftsack (20; 124; 134), der einen Luftsackmund (62, 64; 104) aufweist, dessen Umfangskontur kleiner ist als eine den Vorsprung (48, 50; 88; 94; 96) und den Grundkörper (28, 30) umschließende Umfangskontur und der an dem Luftsackhalter (14) in einer Endlage gehaltenen ist, in der der Luftsackmund (62, 64; 104) den Grundkörper (28, 30) umschließt und dabei den Vorsprung (48, 50; 88; 94; 96; 106; 126) an einer ersten Seite des Vorsprungs (48, 50; 88; 94; 96; 106; 126) hintergreift,
wobei der Vorsprung (48, 50; 88; 94; 96) eine Ausnehmung (52, 54; 90; 92) aufweist, die sich von der ersten Seite des Vorsprungs (48, 50; 88; 94; 96) durch diesen hindurch zu einer zweiten, der ersten gegenüberliegenden Seite erstreckt, und
wobei der Vorsprung (48, 50; 88; 94; 96) mit der Ausnehmung (52, 54; 90; 92) und der Luftsackmund (62, 64; 104) so ausgebildet sind, dass zur Montage des Luftsacks (20; 124; 134) an dem Luftsackhalter (14) ein Einführabschnitt (85) eines Randes (66, 68; 100; 120; 122; 132) des Luftsackmundes (62, 64; 104) in die Ausnehmung (52, 54; 90; 92) einführbar ist und dabei ein erster an den Einführabschnitt (85) angrenzender Abschnitt (86) des Randes (66, 68; 100) auf der ersten und ein zweiter an den Einführabschnitt (85) angrenzender Abschnitt (86') des Randes (66, 68; 100) auf der zweiten Seite des Vorsprungs (48, 50; 88; 94; 96) angeordnet sind, und dass der Rand (66, 68; 100) dann durch eine Drehbewegung relativ zu dem Grundkörper (28, 30) und/oder wenigstens eine Verschiebung und/oder ein Dehnung des Randes (66, 68; 100) in die Endlage hinein bewegbar ist.

4. Luftsackmodul nach Anspruch 3,
**dadurch gekennzeichnet,**
**dass** der Vorsprung (48, 50; 88; 94; 96) bis auf die Ausnehmung (52, 54; 90; 92) um den Grundkörper (28, 30) umlaufend ausgebildet ist.

5. Luftsackmodul nach Anspruch 3 oder 4,
**dadurch gekennzeichnet,**
**dass** die Ausnehmung (52, 54; 90; 92) als ein den Vorsprung (48, 50; 88; 94; 96) durchdringender Schlitz (52, 54; 92) ausgebildet ist.

6. Luftsackmodul nach einem der Ansprüche 3 bis 5,
**dadurch gekennzeichnet,**
**dass** der Schlitz (52, 54; 92) um weniger als 2 mm weiter ist als die Stärke des Luftsack (20; 124; 134) im Bereich des Randes (66, 68; 100).

7. Luftsackmodul nach einem der Ansprüche 3 bis 6,
**dadurch gekennzeichnet,**
**dass** eine Richtung, in der wenigstens ein Bereich des Schlitzes (92) durch den Vorsprung (94) hindurch tritt, zu einer Normalen auf eine Anlagefläche (95), an der der Rand (66, 68) des Luftsackmundes (62, 64) in der Endlage oder bei Zug in Richtung des Vorsprungs (94) anliegt, geneigt ist.

8. Luftsackmodul nach einem der vorhergehenden Ansprüche,
**dadurch gekennzeichnet,**
**dass** eine Anlagefläche (95, 98) des Vorsprungs (48, 50; 88; 94; 96; 106; 126), an der der Rand (66, 68; 100; 120; 122; 132) des Luftsackmundes (62, 64; 104) in der Endlage oder bei Zug in Richtung des Vorsprungs (48, 50; 88; 94; 96; 106; 126) anliegt, eben ist.

9. Luftsackmodul nach einem der vorhergehenden Ansprüche,
**dadurch gekennzeichnet,**
**dass** eine Anlagefläche (98) des Vorsprungs (96), an der der Rand (66, 68) des Luftsackmundes (62, 64) in der Endlage oder bei Zug in Richtung des Vorsprungs (96) anliegt, konisch geformt ist.

10. Luftsackmodul nach einem der vorhergehenden Ansprüche,
**dadurch gekennzeichnet,**
**dass** der Vorsprung (48, 50; 88; 94; 96; 106; 126) eine kreisförmige Außenkontur aufweist

11. Luftsackmodul nach einem der vorhergehenden Ansprüche,
**dadurch gekennzeichnet,**
**dass** ein an den Vorsprung (48, 50; 88; 94; 96; 106; 126) angrenzender Abschnitt (28, 30) des Grundkörpers (28, 30) einen kreisförmigen Querschnitt aufweist.

12. Luftsackmodul nach einem der vorhergehenden Ansprüche,
**dadurch gekennzeichnet,**
**dass** der Luftsackmund (62, 64; 104) im Wesentlichen kreisförmig ist.

13. Luftsackmodul nach einem der vorhergehenden Ansprüche,
**dadurch gekennzeichnet,**
**dass** der Luftsackmund (104) elliptisch geformt ist.

14. Luftsackmodul nach einem der vorhergehenden Ansprüche,
**dadurch gekennzeichnet,**
**dass** der Rand (100; 120; 122; 132) wenigstens abschnittsweise verstärkt ist.

15. Luftsackmodul nach Anspruch 14,
**dadurch gekennzeichnet,**
**dass** der Rand (122) einen Verstärkungsring (128) aufweist.

16. Luftsackmodule nach Anspruch 14 oder 15,
**dadurch gekennzeichnet,**
**dass** der Rand (100) zur Verstärkung beschichtet ist.

17. Luftsackmodul nach einem der Ansprüche 14 bis 16,
**dadurch gekennzeichnet,**
**dass** der Rand (132) durch wenigstens zwei miteinander verbundene Lagen (135) aus Luftsackmaterial gebildet ist.

18. Luftsackmodul nach einem der vorhergehenden Ansprüche,
**dadurch gekennzeichnet,**
**dass** der Vorsprung (126) auf der dem Luftsack (124; 134) in der Endlage zugewandten Seite entlang wenigstens eines Teils seines Umfangs eine Hinterschneidung (130) aufweist.

19. Luftsackmodul nach einem der vorhergehenden Ansprüche,
**dadurch gekennzeichnet,**
**dass** ein zu dem Vorsprung (48, 50; 88; 94; 96; 106; 126) komplementärer Vorsprung (26, 58) vorgesehen ist, der mit dem Vorsprung (48, 50; 88; 94; 96; 106; 126) wenigstens abschnittsweise eine Nut (56, 60) zur Aufnahme des Randes (66, 68; 100; 120; 122; 132) des Luftsack (20; 124; 134) bildet.

20. Luftsackmodul nach Anspruch 19,
**dadurch gekennzeichnet,**
**dass** der komplementäre Vorsprung (26, 58) als um den Grundkörper (28, 30) umlaufender Flansch ausgebildet ist.

21. Luftsackmodul nach einem der vorhergehenden Ansprüche,
**dadurch gekennzeichnet,**
**dass** der Luftsackhalter (14) einstückig ausgebildet ist.

22. Luftsackmodul nach einem der vorhergehenden Ansprüche,
**dadurch gekennzeichnet,**
**dass** der Luftsackhalter (14) wenigstens teilweise als Diffusor (28) ausgebildet ist.

23. Luftsackmodul nach einem der vorhergehenden Ansprüche,
**dadurch gekennzeichnet,**
**dass** der Luftsackhalter (14) mit einem der Befestigung des Luftsackmoduls dienenden Trägerelement (12) des Luftsackmoduls einstückig ausgebildet ist.

24. Luftsackmodul nach einem der vorhergehenden Ansprüche,
**dadurch gekennzeichnet,**
**dass** der Luftsackhalter (14) einen an dem Umfang des Grundkörpers (28, 30) in axialer Richtung gegenüber dem Vorsprung (48, 50; 88; 94; 96; 106; 126) versetzten weiteren Vorsprung (48, 50; 88; 94; 96; 106; 126) aufweist, und
**dass** der Luftsack (20; 124; 134) ein toroidaler Luftsack (20; 124; 134) mit einem weiteren Luftsackmund (62, 64; 104) ist, der einen in einer Endlage den Grundkörper (28, 30) umschließenden und den weiteren Vorsprung (48, 50; 88; 94; 96; 106; 126) hintergreifenden Rand (66, 68; 100; 120; 122; 132) aufweist und dessen Umfangskontur kleiner ist als eine Umfangskontur um einen Querschnitt durch den Grundkörper (28, 30) und den weiteren Vorsprung (48, 50; 88; 94; 96; 106; 126).

25. Verfahren zur Befestigung eines Luftsacks, der einen durch einen umlaufenden Rand (66, 68; 120; 122; 132) begrenzten Luftsackmund (62, 64; 104) aufweist, an einem Luftsackhalter (14), der einen Grundkörper (28, 30) und einen auf einer Umfangsfläche des Grundkörpers (28, 30) um diesen, ganz oder bis auf wenigstens eine Unterbrechung umlaufenden Vorsprung (106; 126) aufweist, bei dem
ein erster Abschnitt (108; 116) eines Randes (66, 68; 120; 122; 132) des über den Vorsprung (106; 126) hinweg hinter denselben geführt wird, und
ein zweiter, zu dem ersten komplementärer Abschnitt (110; 116) des Randes (66, 68; 120; 122; 132) unter Verformung des Luftsackmundes (62, 64; 104) in eine Endlage hinein bewegt wird, in der der Rand (66, 68; 120; 122; 132) den Grundkörper (28, 30) umschließt und dabei den Vorsprung (106; 126) hintergreift.

26. Verfahren nach Anspruch 25,
**dadurch gekennzeichnet,**
**dass** der Luftsackmund (62, 64; 104) bei der Verformung gedehnt wird.

27. Verfahren zur Befestigung eines Luftsacks, der einen durch einen umlaufenden Rand (66, 68; 100) begrenzten Luftsackmund (62, 64) aufweist, an einem Luftsackhalter (14), der einen Grundkörper (28, 30) und einen an einer Umfangsfläche des Grundkörpers (28, 30) ausgebildeten Vorsprung (48, 50; 88; 94; 96) mit einer Ausnehmung (52, 54; 90; 92) aufweist, die sich von einer erste Seite des Vorsprungs (48, 50; 88; 94; 96) durch diesen hindurch zu einer zweiten, der ersten gegenüberliegenden Seite erstreckt, bei dem
ein Einführabschnitt (85) eines Randes (66, 68; 100) des Luftsackmundes (62, 64; 104) in die Ausnehmung (52, 54; 90; 92) eingeführt wird, wobei angrenzende erste und zweite Abschnitte (86, 86') des Randes (66, 68; 100) auf der ersten bzw. der zweiten Seite des Vorsprungs (48, 50; 88; 94; 96) angeordnet sind, und
der Rand (66, 68; 100) durch eine Drehbewegung relativ zu dem Grundkörper (28, 30) und/oder wenigstens eine Verschiebung und/oder eine Dehnung des Randes (66, 68; 100) in eine Endlage hinein bewegt wird, in der der Rand (66, 68; 100) den Grundkörper (28, 30) umschließt und dabei den Vorsprung (48, 50; 88; 94; 96) hintergreift.

28. Verfahren nach einem der Ansprüche 25 bis 27,
**dadurch gekennzeichnet,**
**dass** ein Luftsack (20) mit einem elliptisch geformten Luftsackmund (104) verwendet wird, und
**dass** zunächst als erster Abschnitt (108) ein Abschnitt des Randes (100), der im Wesentlichen durch die Enden der längeren Hauptachse der Ellipse begrenzt ist, über den Vorsprung (48, 50) geführt wird, dann der zweite Abschnitt (110) hinter den Vorsprung (48, 50) in die Endlage bewegt wird.

29. Verfahren nach Anspruch 27 und 28,
**dadurch gekennzeichnet,**
**dass** der Luftsack (20) durch eine Drehung in die Endlage bewegt wird, in der die längere Hauptachse des elliptisch geformten Luftsackmundes (104) nicht im Bereich der Ausnehmung (52, 54) angeordnet ist.
